# EUROPEAN PATENT APPLICATION

(11) **EP 4 841 927 A1**
(43) Date of publication of application: **18.11.2026**
(21) Application number: 25790405.2
(22) Date of filing: 31.03.2025
(51) Int. Cl.: H04L 5/14, H04W 72/0453, H04L 5/00, H04W 72/0446, H04W 72/50, H04W 72/232, H04W 8/24

(54) **METHOD AND APPARATUS FOR UPLINK COMMUNICATION IN SBFD SUBBAND**

(30) Priority: 15.04.2024 KR 20240050339
(71) Applicant: Hyundai Motor Company, Seoul 06797 (KR); Kia Corporation, Seoul 06797 (KR)
(72) Inventor: LEE, Jeong Su, Hwaseong-si, Gyeonggi-do 18280 (KR); HONG, Ui Hyun, Hwaseong-si, Gyeonggi-do 18280 (KR); SUH, Young Kil, Hwaseong-si, Gyeonggi-do 18280 (KR); HAHN, Gene Back, Hwaseong-si, Gyeonggi-do 18280 (KR)
(74) Representative: Isarpatent
(86) International application number: PCT/KR2025/004152
(87) International publication number: WO 2025/220919

(57) **Abstract**

Disclosed are a method and apparatus for uplink communication in a subband full duplex (SBFD) subband. A method for a user equipment (UE) comprises the steps of: receiving SBFD configuration information from a base station; on the basis of information included in the SBFD configuration information, identifying an uplink (UL) subband configured in a downlink (DL) period within a time domain; and performing UL communication with the base station after transmission of a synchronization signal block (SSB) by the base station within the UL subband.

## Description

### [Technical Field]

The present disclosure relates to an enhanced communication technique, and more particularly, to an uplink communication technique in a subband full duplex (SBFD) subband.

### [Background Art]

A communication network (e.g., 5G communication network or 6G communication network) is being developed to provide enhanced communication services compared to the existing communication networks (e.g., long term evolution (LTE), LTE-Advanced (LTE-A), etc.). The 5G communication network (e.g., New Radio (NR) communication network) can support frequency bands both below 6 GHz and above 6 GHz. In other words, the 5G communication network can support one or both of frequency range 1 (FR1) and FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, a communication network may support a subband full duplex (SBFD) operation. In the communication network supporting the SBFD operation, an uplink (UL) subband may be configured in a downlink (DL) period. Methods for indicating a location of the UL subband configured in the DL period may be required. In addition, DL transmission may occur in the UL subband, and, in this case, methods for resolving a collision between the DL transmission and UL transmission may be required.

### [Disclosure]

### [Technical Problem]

The present disclosure is directed to providing a method and an apparatus for uplink communication in a subband full duplex (SBFD) subband.

### [Technical Solution]

A method of a user equipment (UE), according to exemplary embodiments of the present disclosure for achieving the above-described objective, may comprise: receiving, from a base station, subband full duplex (SBFD) configuration information; identifying, based on information included in the SBFD configuration information, an uplink (UL) subband configured in a downlink (DL) period in a time domain; and performing UL communication with the base station within the UL subband after DL transmission of the base station.

The UL communication may be performed after a time gap from the DL transmission.

The DL transmission may be synchronization signal block (SSB) transmission.

The time gap may be configured for the UE by the base station.

The time gap may be configured in units of symbols.

The UL communication may be performed in the UL subband that does not overlap with at least one resource used for the DL transmission, and the DL transmission may be SSB transmission.

The UL communication may be transmission of a random access (RA) preamble, and a random access channel (RACH) occasion (RO) for transmission of the RA preamble may be configured within the UL subband.

The UL communication may be performed within the UL subband after a time gap from a last non-SBFD symbol.

The UL communication may be grant-based UL transmission or configured grant (CG)-based UL transmission, and the UL communication may be performed in a valid resource within the UL subband that does not overlap with DL transmission of the base station.

Based on the UL subband overlapping with at least one resource for semi-persistent scheduling (SPS) downlink (DL) transmission and a priority of the UL communication being higher than a priority of the SPS DL transmission, the UL communication may be performed within the UL subband.

A method of a base station, according to exemplary embodiments of the present disclosure for achieving the above-described objective, may comprise: generating subband full duplex (SBFD) configuration information; transmitting the SBFD configuration information to a user equipment (UE); identifying, based on information included in the SBFD configuration information, an uplink (UL) subband configured in a downlink (DL) period in a time domain; and performing UL communication with the UE within the UL subband after DL transmission of the base station.

The UL communication may be performed after a time gap from the DL transmission.

The DL transmission may be synchronization signal block (SSB) transmission.

The time gap may be configured for the UE by the base station.

The time gap may be configured in units of symbols.

The UL communication may be performed in the UL subband that does not overlap with at least one resource used for the DL transmission, and the DL transmission may be SSB transmission.

The UL communication may be transmission of a random access (RA) preamble, and a random access channel (RACH) occasion (RO) for transmission of the RA preamble may be configured within the UL subband.

The UL communication may be performed within the UL subband after a time gap from a last non-SBFD symbol.

The UL communication may be grant-based UL transmission or configured grant (CG)-based UL transmission, and the UL communication may be performed in a valid resource within the UL subband that does not overlap with DL transmission of the base station.

Based on the UL subband overlapping with at least one resource for semi-persistent scheduling (SPS) downlink (DL) transmission and a priority of the UL communication being higher than a priority of the SPS DL transmission, the UL communication may be performed within the UL subband.

### [Advantageous Effects]

According to the present disclosure, a base station may transmit, to a terminal, information indicating a start point and/or an end point of a UL subband configured within a DL period. The terminal may identify a location of the UL subband within the DL period based on the information received from the base station and may perform UL communication with the base station in the UL subband. According to the above-described operation, the location of the UL subband within the DL period can be accurately indicated, and efficiency of an SBFD operation can be improved. When SSB transmission of the base station is performed within the UL subband, the terminal may perform UL transmission after a time gap from the SSB transmission within the UL subband. According to the above-described operation, a collision between UL transmission and DL transmission in the UL subband can be prevented, and efficiency of UL transmission in the UL subband can be improved.

### [Description of Drawings]

FIG. 1 is a conceptual diagram illustrating exemplary embodiments of a communication system.
FIG. 2 is a block diagram illustrating exemplary embodiments of a communication node constituting a communication system.
FIG. 3 is a block diagram illustrating exemplary embodiments of communication nodes performing communication.
FIG. 4A is a block diagram illustrating exemplary embodiments of a transmission path.
FIG. 4B is a block diagram illustrating exemplary embodiments of a reception path.
FIG. 5 is a conceptual diagram illustrating exemplary embodiments of a system frame in a communication system.
FIG. 6 is a conceptual diagram illustrating exemplary embodiments of a subframe in a communication system.
FIG. 7 is a conceptual diagram illustrating exemplary embodiments of a slot in a communication system.
FIG. 8 is a conceptual diagram illustrating exemplary embodiments of a time-frequency resource in a communication system.
FIG. 9 is a conceptual diagram illustrating an exemplary resource configuration according to a TDD common configuration.
FIG. 10A is a conceptual diagram illustrating a first exemplary embodiment of a start point of a UL subband.
FIG. 10B is a conceptual diagram illustrating a second exemplary embodiment of a start point of a UL subband.
FIG. 11 is a conceptual diagram illustrating an exemplary UL transmission in a UL subband.
FIG. 12 is a conceptual diagram illustrating a UL subband pattern periodicity and a duration of a UL subband.
FIGS. 13A, 13B, and 13C are conceptual diagrams illustrating validity rules for a UL subband.
FIGS. 14A, 14B, 14C, 14D, and 14E are conceptual diagrams illustrating exemplary embodiments of configuration of a UL subband.
FIG. 15 is a sequence diagram illustrating a UL communication method in a UL subband.

### [Mode for Invention]

Since the present disclosure may be modified in various ways and embodied in various forms, specific exemplary embodiments thereof are illustrated in the accompanying drawings and described in detail below. It should be understood, however, that it is not intended to limit the present disclosure to the specific exemplary embodiments but, on the contrary, the present disclosure covers all modifications, equivalents, and alternatives falling within the spirit and scope of the present disclosure.

Relational terms such as "first" and "second" may be used for describing various elements, but the elements should not be limited by the terms. These terms are only used to distinguish one element from another. For example, a first component may be referred to as a second component without departing from the scope of the present disclosure, and the second component may also be similarly referred to as the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, "(re)transmission" may refer to "transmission", "retransmission", or "transmission and retransmission", "(re)configuration" may refer to "configuration", "reconfiguration", or "configuration and reconfiguration", "(re)connection" may refer to "connection", "reconnection", or "connection and reconnection", and "(re)access" may refer to "access", "re-access", or "access and re-access".

When a certain component is referred to as being "coupled to" or "connected to" another component, it should be understood that the certain component is directly "coupled to" or "connected to" the other component or a further component may be disposed therebetween. In contrast, when a certain component is referred to as being "directly coupled to" or "directly connected to" another component, it will be understood that a further component is not disposed therebetween.

The terms used in the present disclosure are only used to describe specific exemplary embodiments, and are not intended to limit the present disclosure. The singular form includes the plural form unless the context clearly dictates otherwise. In the present disclosure, terms such as "comprise" or "have" are intended to designate that a feature, number, step, operation, component, part, or combination thereof described in the specification exists, but it should be understood that the terms do not preclude the presence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and defined in dictionaries should be construed as having meanings consistent with their meanings in the relevant art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments explicitly described herein, as well as combinations of the exemplary embodiments, extensions of the exemplary embodiments, and/or variations of the exemplary embodiments, may be performed. Some operations may be omitted, and the order of the operations may be altered.

Even when a method (e.g., transmission or reception of a signal) to be performed at a first communication node among communication nodes is described in exemplary embodiments, a corresponding second communication node may perform a method (e.g., reception or transmission of the signal) corresponding to the method performed at the first communication node. In other words, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation NodeB (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher-layer signaling, MAC signaling, and physical (PHY) signaling. A message used for higher-layer signaling may be referred to as a 'higher layer message' or 'higher-layer signaling message'. A message used for MAC signaling may be referred to as a 'MAC message' or 'MAC signaling message'. A message used for PHY signaling may be referred to as a 'PHY message' or 'PHY signaling message'. The higher-layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or sidelink control information (SCI)).

In the present disclosure, "configuration for an operation (e.g., transmission operation)" may refer to signaling of configuration information (e.g., information elements, parameters) required for the operation and/or information indicating that the operation is to be performed. "configuration of information elements (e.g., parameters)" may refer to signaling of the information elements. In the present disclosure, "signal and/or channel" may refer to a signal, a channel, or both, and "signal" may be used to mean "signal and/or channel".

A communication network to which exemplary embodiments are applied is not limited to that described below, and the exemplary embodiments may be applied to various communication networks (e.g., 4G communication networks, 5G communication networks, and/or 6G communication networks). Here, 'communication network' may be used interchangeably with a term 'communication system'.

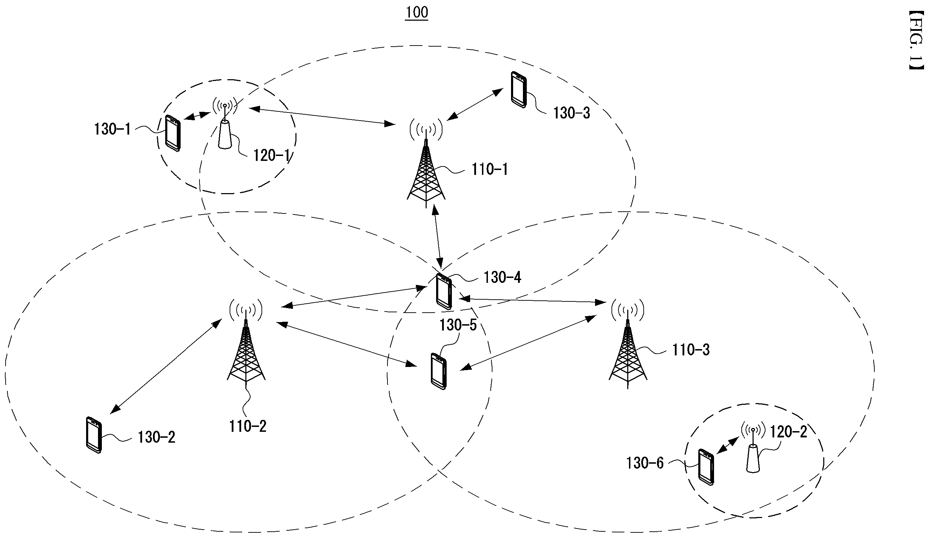

FIG. 1 is a conceptual diagram illustrating exemplary embodiments of a communication system.

As shown in FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further include a core network (e.g., a serving gateway (S-GW), a packet data network (PDN) gateway (P-GW), a mobility management entity (MME)). When the communication system 100 is a 5G communication system (e.g., NR system), the core network may include an access and mobility management function (AMF), a user plane function (UPF), a session management function (SMF), and the like.

The plurality of communication nodes 110 to 130 may support communication protocols (e.g., LTE communication protocol, LTE-A communication protocol, NR communication protocol, etc.) specified in the 3^{rd} generation partnership project (3GPP) standards. The plurality of communication nodes 110 to 130 may support a code division multiple access (CDMA) technique, a wideband CDMA (WCDMA) technique, a time division multiple access (TDMA) technique, a frequency division multiple access (FDMA) technique, an orthogonal frequency division multiplexing (OFDM) technique, a filtered OFDM technique, a cyclic prefix OFDM (CP-OFDM) technique, a discrete Fourier transform spread OFDM (DFT-s-OFDM) technique, an orthogonal frequency division multiple access (OFDMA) technique, a single carrier FDMA (SC-FDMA) technique, a non-orthogonal multiple access (NOMA) technique, a generalized frequency division multiplexing (GFDM) technique, a filter bank multi-carrier (FBMC) technique, a universal filtered multi-carrier (UFMC) technique, a space division multiple access (SDMA) technique, or the like. Each of the plurality of communication nodes may have the following structure.

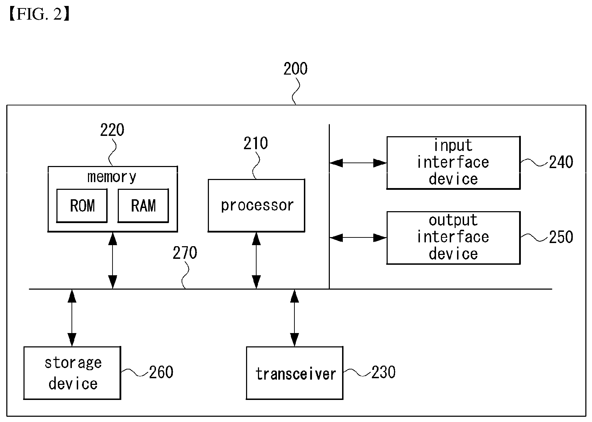

FIG. 2 is a block diagram illustrating exemplary embodiments of a communication node constituting a communication system.

As shown in FIG. 2, a communication node 200 may include at least one processor 210, a memory 220, and a transceiver 230 configured to perform communication via the network. Also, the communication node 200 may further include an input interface device 240, an output interface device 250, a storage device 260, and the like. Each component included in the communication node 200 may communicate with each other through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may include at least one of a volatile storage medium and a non-volatile storage medium. For example, the memory 220 may comprise at least one of read-only memory (ROM) and random access memory (RAM).

Referring again to FIG. 1, the communication system 100 may include a plurality of base stations 110-1, 110-2, 110-3, 120-1, and 120-2, and a plurality of terminals 130-1, 130-2, 130-3, 130-4, 130-5, and 130-6. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may be located within cell coverage of the first base station 110-1. Also, the second terminal 130-2, the fourth terminal 130-4, and the fifth terminal 130-5 may be located within cell coverage of the second base station 110-2. Also, the fifth base station 120-2, the fourth terminal 130-4, the fifth terminal 130-5, and the sixth terminal 130-6 may be located within cell coverage of the third base station 110-3. Also, the first terminal 130-1 may be located within cell coverage of the fourth base station 120-1, and the sixth terminal 130-6 may be located within coverage of the fifth base station 120-2.

Here, each of the plurality of base stations 110-1, 110-2, 110-3, 120-1, and 120-2 may refer to a NodeB, evolved NodeB (eNB), gNB, advanced base station (ABS), high-reliability base station (HR-BS), base transceiver station (BTS), radio base station, radio transceiver, access point, access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may refer to a user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g., a single-user MIMO (SU-MIMO), multi-user MIMO (MU-MIMO), massive MIMO, or the like), coordinated multipoint (CoMP) transmission, carrier aggregation (CA) transmission, transmission in an unlicensed band, sidelink communication (e.g., device-to-device (D2D) communication, proximity services (ProSe)), Internet of Things (IoT) communication, dual connectivity (DC), and/or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 using SU-MIMO, and the fourth terminal 130-4 may receive the signal from the second base station 110-2 using SU-MIMO. Alternatively, the second base station 110-2 may transmit a signal to the fourth terminal 130-4 and fifth terminal 130-5 using MU-MIMO, and the fourth terminal 130-4 and fifth terminal 130-5 may receive the signal from the second base station 110-2 using MU-MIMO.

The first base station 110-1, the second base station 110-2, and the third base station 110-3 may transmit a signal to the fourth terminal 130-4 using CoMP, and the fourth terminal 130-4 may receive the signal from the first base station 110-1, the second base station 110-2, and the third base station 110-3 using CoMP. Also, each of the plurality of base stations 110-1, 110-2, 110-3, 120-1, and 120-2 may exchange signals with the corresponding terminal 130-1, 130-2, 130-3, 130-4, 130-5, or 130-6 which belongs to its cell coverages using CA. Each of the base stations 110-1, 110-2, and 110-3 may control sidelink communications between the fourth terminal 130-4 and the fifth terminal 130-5, and thus the fourth terminal 130-4 and the fifth terminal 130-5 may perform the sidelink communications under control of the second base station 110-2 and the third base station 110-3, respectively.

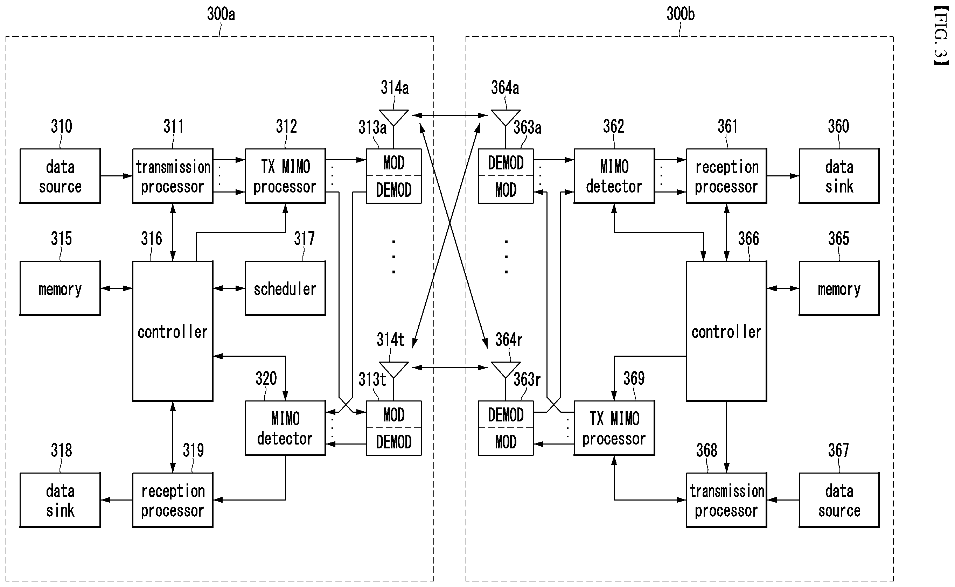

Meanwhile, communication nodes performing communications in the communication network may be configured as follows. A communication node shown in FIG. 3 may be a specific exemplary embodiment of the communication node shown in FIG. 2.

FIG. 3 is a block diagram illustrating exemplary embodiments of communication nodes performing communication.

As shown in FIG. 3, each of a first communication node 300a and a second communication node 300b may be a base station or UE. The first communication node 300a may transmit a signal to the second communication node 300b. A transmission processor 311 included in the first communication node 300a may receive data (e.g., data unit) from a data source 310. The transmission processor 311 may receive control information from a controller 316. The control information may include at least one of system information, RRC configuration information (e.g., information configured by RRC signaling), MAC control information (e.g., MAC CE), or PHY control information (e.g., DCI or SCI).

The transmission processor 311 may generate data symbol(s) by performing processing operations (e.g., encoding operation, symbol mapping operation, etc.) on the data. The transmission processor 311 may generate control symbol(s) by performing processing operations (e.g., encoding operation, symbol mapping operation, etc.) on the control information. In addition, the transmission processor 311 may generate synchronization/reference symbol(s) for synchronization signals and/or reference signals.

A Tx MIMO processor 312 may perform spatial processing operations (e.g., precoding operations) on the data symbol(s), control symbol(s), and/or synchronization/reference symbol(s). An output (e.g., a symbol stream) of the Tx MIMO processor 312 may be provided to modulators (MODs) included in transceivers 313a to 313t. Each modulator may generate modulation symbols by performing processing operations on the symbol stream, and may generate signals by performing additional processing operations (e.g., analog conversion operation, amplification operation, filtering operation, up-conversion operation, etc.) on the modulation symbols. The signals generated by the modulators of the transceivers 313a to 313t may be transmitted through antennas 314a to 314t.

The signals transmitted by the first communication node 300a may be received at antennas 364a to 364r of the second communication node 300b. The signals received at the antennas 364a to 364r may be provided to demodulators (DEMODs) included in transceivers 363a to 363r. Each demodulator may obtain samples by performing processing operations (e.g., filtering operation, amplification operation, down-conversion operation, digital conversion operation, etc.) on the signals. Each demodulator may perform additional processing operations on the samples to obtain symbols. A MIMO detector 362 may perform MIMO detection operations on the symbols. A reception processor 361 may perform processing operations (e.g., de-interleaving operation, decoding operation, etc.) on the symbols. An output of the reception processor 361 may be provided to a data sink 360 and a controller 366. For example, the data may be provided to the data sink 360 and the control information may be provided to the controller 366.

On the other hand, the second communication node 300b may transmit signals to the first communication node 300a. A transmission processor 368 included in the second communication node 300b may receive data (e.g., data unit) from a data source 367 and perform processing operations on the data to generate data symbol(s). The transmission processor 368 may receive control information from the controller 366 and perform processing operations on the control information to generate control symbol(s). In addition, the transmission processor 368 may generate reference symbol(s) by performing processing operations on reference signals.

A Tx MIMO processor 369 may perform spatial processing operations (e.g., precoding operations) on the data symbol(s), control symbol(s), and/or reference symbol(s). An output (e.g., symbol stream) of the Tx MIMO processor 369 may be provided to modulators (MODs) included in the transceivers 363a to 363t. Each modulator may generate modulation symbols by performing processing operations on the symbol stream, and may generate signals by performing additional processing operations (e.g., analog conversion operation, amplification operation, filtering operation, up-conversion operation) on the modulation symbols. The signals generated by the modulators of the transceivers 363a to 363t may be transmitted through the antennas 364a to 364t.

The signals transmitted by the second communication node 300b may be received at the antennas 314a to 314r of the first communication node 300a. The signals received at the antennas 314a to 314r may be provided to demodulators (DEMODs) included in the transceivers 313a to 313r. Each demodulator may obtain samples by performing processing operations (e.g., filtering operation, amplification operation, down-conversion operation, digital conversion operation) on the signals. The demodulator may perform additional processing operations on the samples to obtain symbols. A MIMO detector 320 may perform MIMO detection operations on the symbols. The reception processor 319 may perform processing operations (e.g., de-interleaving operation, decoding operation, etc.) on the symbols. An output of the reception processor 319 may be provided to a data sink 318 and the controller 316. For example, the data may be provided to the data sink 318 and the control information may be provided to the controller 316.

Memories 315 and 365 may store the data, control information, and/or program codes. A scheduler 317 may perform scheduling operations for communication. The processors 311, 312, 319, 361, 368, and 369 and the controllers 316 and 366 shown in FIG. 3 may be the processor 210 shown in FIG. 2, and may be used to perform methods described in the present disclosure.

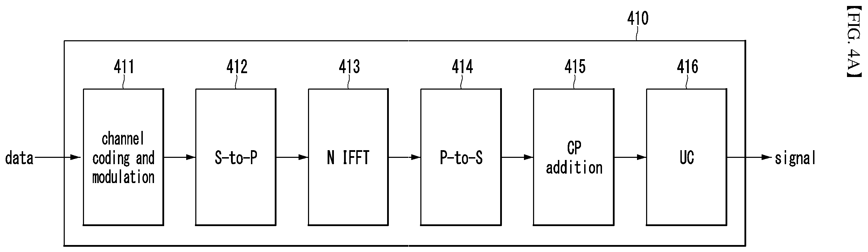

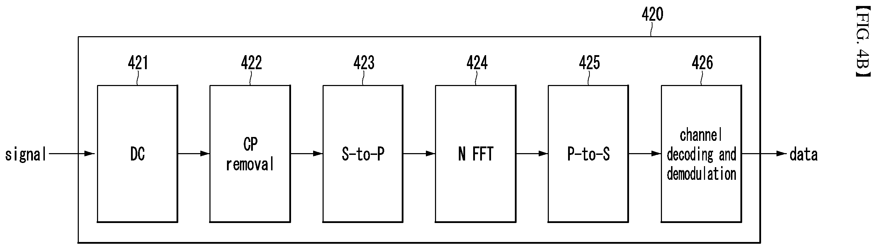

FIG. 4A is a block diagram illustrating exemplary embodiments of a transmission path, and FIG. 4B is a block diagram illustrating exemplary embodiments of a reception path.

As shown in FIGS. 4A and 4B, a transmission path 410 may be implemented in a communication node that transmits signals, and a reception path 420 may be implemented in a communication node that receives signals. The transmission path 410 may include a channel coding and modulation block 411, a serial-to-parallel (S-to-P) block 412, an N-point inverse fast Fourier transform (N-point IFFT) block 413, a parallel-to-serial (P-to-S) block 414, a cyclic prefix (CP) addition block 415, and an up-converter (UC) 416. The reception path 420 may include a down-converter (DC) 421, a CP removal block 422, an S-to-P block 423, an N-point FFT block 424, a P-to-S block 425, and a channel decoding and demodulation block 426. Here, N may be a natural number.

In the transmission path 410, information bits may be input to the channel coding and modulation block 411. The channel coding and modulation block 411 may perform a coding operation (e.g., low-density parity check (LDPC) coding operation, polar coding operation, etc.) and a modulation operation (e.g., Quadrature Phase Shift Keying (QPSK), Quadrature Amplitude Modulation (QAM), etc.) on the information bits. An output of the channel coding and modulation block 411 may be a sequence of modulation symbols.

The S-to-P block 412 may convert frequency domain modulation symbols into parallel symbol streams to generate N parallel symbol streams. N may be the IFFT size or the FFT size. The N-point IFFT block 413 may generate time domain signals by performing an IFFT operation on the N parallel symbol streams. The P-to-S block 414 may convert the output (e.g., parallel signals) of the N-point IFFT block 413 to serial signals to generate the serial signals.

The CP addition block 415 may insert a CP into the signals. The UC 416 may up-convert a frequency of the output of the CP addition block 415 to a radio frequency (RF). Further, the output of the CP addition block 415 may be filtered in baseband before the up-conversion.

The signal transmitted from the transmission path 410 may be input to the reception path 420. Operations in the reception path 420 may be reverse operations for the operations in the transmission path 410. The DC 421 may down-convert a frequency of the received signals to a baseband frequency. The CP removal block 422 may remove a CP from the signals. The output of the CP removal block 422 may be serial signals. The S-to-P block 423 may convert the serial signals into parallel signals. The N-point FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and may restore data by performing a decoding operation on a result of the demodulation operation.

In FIGS. 4A and 4B, discrete Fourier transform (DFT) and inverse DFT (IDFT) may be used instead of FFT and IFFT. Each of the blocks (e.g., components) in FIGS. 4A and 4B may be implemented by at least one of hardware, software, or firmware. For example, some blocks in FIGS. 4A and 4B may be implemented by software, and other blocks may be implemented by hardware or a combination of hardware and software. In FIGS. 4A and 4B, one block may be subdivided into a plurality of blocks, a plurality of blocks may be integrated into one block, some blocks may be omitted, and blocks supporting other functions may be added.

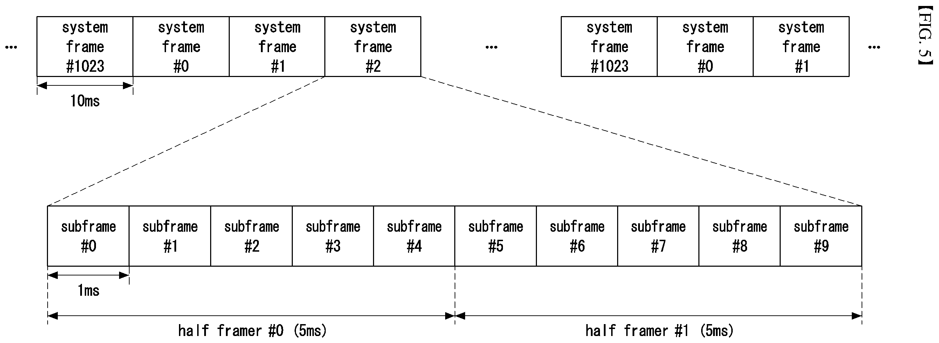

FIG. 5 is a conceptual diagram illustrating exemplary embodiments of a system frame in a communication system.

As shown in FIG. 5, time resources in the communication system may be divided on a frame basis. For example, system frames of the communication system may be configured continuously in the time domain. The length of the system frame may be 10 milliseconds (ms). A system frame number (SFN) may be set to one of #0 to #1023. In this case, 1024 system frames may be repeated in the time domain of the communication system. For example, an SFN of a system frame following the system frame #1023 may be #0.

One system frame may include two half frames. The length of one half frame may be 5 ms. A half frame located at a starting region of the system frame may be referred to as 'half frame #0', and a half frame located at an ending region of the system frame may be referred to as 'half frame #1'. One system frame may include 10 subframes. The length of one subframe may be 1 ms. 10 subframes within one system frame may be referred to as subframes #0-#9.

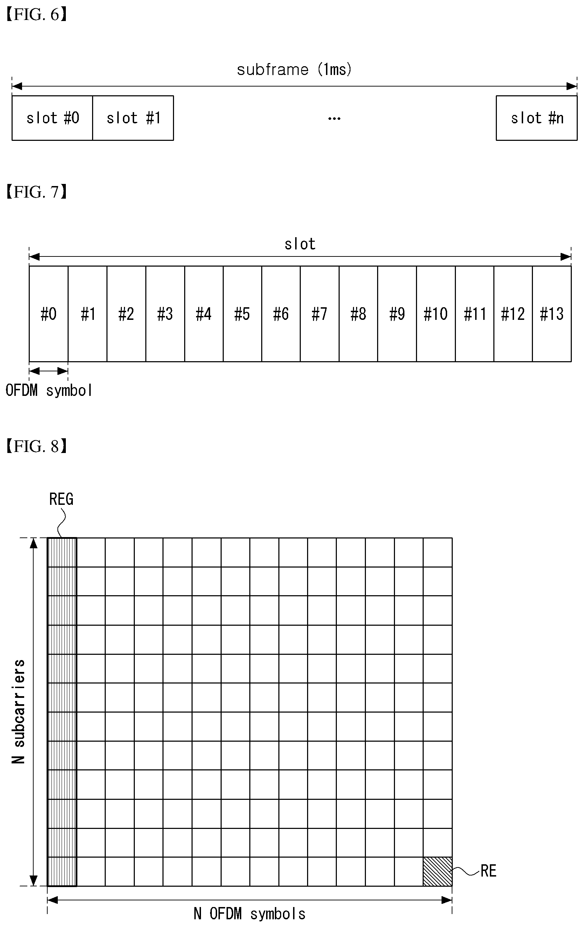

FIG. 6 is a conceptual diagram illustrating exemplary embodiments of a subframe in a communication system.

As shown in FIG. 6, one subframe may include n slots, and n may be a natural number. Accordingly, one subframe may consist of one or more slots.

FIG. 7 is a conceptual diagram illustrating exemplary embodiments of a slot in a communication system.

As shown in FIG. 7, one slot may include one or more symbols. For example, one slot shown in FIG. 7 may include 14 symbols. The length of a slot may vary according to the number of symbols included in a slot and the length of symbol. Alternatively, the length of a slot may vary according to a numerology.

The numerology applied to physical signals and channels in a communication system may be variable. The numerology may be adjusted to meet various technical requirements of the communication system. In a communication system where a cyclic prefix (CP)-based OFDM waveform technology is applied, the numerology may include a subcarrier spacing and a CP length (or CP type). Table 1 may illustrate a first exemplary embodiment of a method for configuring numerologies for a CP-OFDM-based communication system. Depending on a frequency band in which the communication system operates, at least some of the numerologies in Table 1 may be supported. Additionally, the communication system may support numerologies not listed in Table 1.

**[Table 1]**

| Subcarrier spacing | 15 kHz | 30 kHz | 60 kHz | 120 kHz | 240 kHz | 480 kHz |
|---|---|---|---|---|---|---|
| OFDM symbol length [µs] | 66.7 | 33.3 | 16.7 | 8.3 | 4.2 | 2.1 |
| CP length [µs] | 4.76 | 2.38 | 1.19 | 0.60 | 0.30 | 0.15 |
| Number of OFDM symbols within 1ms | 14 | 28 | 56 | 112 | 224 | 448 |

When a subcarrier spacing is 15 kHz (e.g., µ = 0), the length of a slot may be 1 ms. In this case, one system frame may include 10 slots. When a subcarrier spacing is 30 kHz (e.g., µ = 1), the length of a slot may be 0.5 ms. In this case, one system frame may include 20 slots.

When a subcarrier spacing is 60 kHz (e.g., µ = 2), the length of a slot may be 0.25 ms. In this case, one system frame may include 40 slots. When a subcarrier spacing is 120 kHz (e.g., µ = 3), the length of a slot may be 0.125 ms. In this case, one system frame may include 80 slots. When a subcarrier spacing is 240 kHz (e.g., µ = 4), the length of a slot may be 0.0625 ms. In this case, one system frame may include 160 slots.

The symbol may be configured as a downlink (DL) symbol, a flexible (FL) symbol, or an uplink (UL) symbol. A slot composed of only DL symbols may be referred to as a 'DL slot', a slot composed of only FL symbols may be referred to as a 'FL slot', and a slot composed of only UL symbols may be referred to as a 'UL slot'.

A slot format may be semi-statically configured through higher-layer signaling (e.g., RRC signaling). Information indicating a semi-static slot format may be included in system information, and the semi-static slot format may be configured cell-specifically. Additionally, a semi-static slot format may be further configured for each terminal through terminal-specific higher-layer signaling (e.g., RRC signaling). Flexible symbols in the cell-specific slot format may be overridden to be downlink symbols or uplink symbols through terminal-specific higher-layer signaling. Furthermore, a slot format may be dynamically indicated through physical layer signaling (e.g., slot format indicator (SFI) included in DCI). The semi-statically configured slot format may be overridden by the dynamically indicated slot format. For example, flexible symbols configured semi-statically may be overridden to be downlink symbols or uplink symbols by the SFI.

Reference signals may include Channel State Information-Reference Signal (CSI-RS), Sounding Reference Signal (SRS), Demodulation-Reference Signal (DM-RS), and Phase Tracking-Reference Signal (PT-RS). Channels may include Physical Broadcast Channel (PBCH), Physical Downlink Control Channel (PDCCH), Physical Downlink Shared Channel (PDSCH), Physical Uplink Control Channel (PUCCH), Physical Uplink Shared Channel (PUSCH), Physical Sidelink Control Channel (PSCCH), and Physical Sidelink Shared Channel (PSSCH). In the present disclosure, a control channel may refer to PDCCH, PUCCH, or PSCCH, and a data channel may refer to PDSCH, PUSCH, or PSSCH.

FIG. 8 is a conceptual diagram illustrating exemplary embodiments of a time-frequency resource in a communication system.

As shown in FIG. 8, a resource composed of one OFDM symbol on the time axis and one subcarrier on the frequency axis may be defined as a 'resource element (RE)'. A resource composed of one OFDM symbol on the time axis and K subcarriers on the frequency axis may be defined as a 'resource element group (REG)'. The REG may include K REs. The REG may be used as a basic unit of resource allocation in the frequency domain. K may be a natural number. For example, K may be 12. N may be a natural number. In the slot shown in FIG. 7, N may be 14. N OFDM symbols may be used as a basic unit of resource allocation in the time domain.

In the present disclosure, an RB may refer to a common RB (CRB). Alternatively, an RB may refer to a physical RB (PRB) or a virtual RB (VRB). In a communication system, a CRB may refer to an RB that constitutes a set of contiguous RBs (e.g., a common RB grid) based on a reference frequency (e.g., point A). A carrier and/or bandwidth part may be mapped onto the common RB grid. That is, a carrier and/or bandwidth part may be configured with CRB(s). The RBs or CRBs that constitute a bandwidth part may be referred to as PRBs, and a CRB index may be appropriately converted to a PRB index within the bandwidth part.

Downlink data may be transmitted through a PDSCH. A base station may transmit configuration information (e.g., scheduling information) for the PDSCH to a terminal through a PDCCH. The terminal may obtain the configuration information of the PDSCH by receiving the PDCCH (e.g., Downlink Control Information (DCI)). For example, the configuration information of the PDSCH may include a Modulation and Coding Scheme (MCS) used for transmission/reception of the PDSCH, time resource information of the PDSCH, frequency resource information of the PDSCH, and feedback resource information for the PDSCH. The PDSCH may refer to a radio resource where the downlink data is transmitted and received. Alternatively, the PDSCH may refer to the downlink data itself. The PDCCH may refer to a radio resource where the downlink control information (e.g., DCI) is transmitted and received. Alternatively, the PDCCH may refer to the downlink control information itself.

The terminal may perform a monitoring operation for the PDCCH to receive the PDSCH transmitted from the base station. The base station may notify the terminal of configuration information for the PDCCH monitoring operation using a higher-layer message (e.g., Radio Resource Control (RRC) message). The configuration information for the PDCCH monitoring operation may include Control Resource Set (CORESET) information and search space information.

The CORESET information may include PDCCH DMRS information, PDCCH precoding information, and PDCCH occasion information, and the like. A PDCCH DMRS may be a DMRS used for demodulating a PDCCH. A PDCCH occasion refers to a region where a PDCCH may exist, meaning it is a region where DCI can be transmitted. A PDCCH occasion may also be referred to as a PDCCH candidate. The PDCCH occasion information may include time resource information and frequency resource information for the PDCCH occasion. In the time domain, the length of the PDCCH occasion may be indicated in symbol units. In the frequency domain, the size of the PDCCH occasion can be indicated in RB units (e.g., in PRB units or CRB units).

The search space information may include a CORESET identifier (ID) associated with a search space, a periodicity of PDCCH monitoring, and/or an offset of PDCCH monitoring. The periodicity and offset of PDCCH monitoring may each be indicated in slot units. Additionally, the search space information may further include an index of a symbol where the PDCCH monitoring operation starts.

The base station may configure Bandwidth Part(s) (BWP(s)) for downlink communication. The BWP(s) may be configured differently for each terminal. The base station may notify the terminal of BWP configuration information using higher-layer signaling. The higher-layer signaling may refer to a transmission operation of system information and/or a transmission operation of RRC message(s). The number of BWPs configured for a single terminal may be one or more. The terminal may receive the BWP configuration information from the base station and identify the configured BWP(s) based on the received configuration information. When multiple BWPs are configured for downlink communication, the base station may activate one or more BWPs from among the multiple BWPs. The base station may transmit configuration information of the activated BWP(s) to the terminal using at least one of higher-layer signaling, Medium Access Control (MAC) Control Element (CE), or DCI. The base station may perform downlink communication using the activated BWP(s). The terminal may identify the activated BWP(s) by receiving the configuration information from the base station and perform downlink reception operations on the activated BWP(s).

Meanwhile, a communication system (e.g., an NR communication system, a 5G communication system, or a 6G communication system) may support usage scenarios such as enhanced Mobile BroadBand (eMBB), Ultra Reliable Low Latency Communication (URLLC), and massive Machine Type Communication (mMTC). A communication system (e.g., a communication network) may support a subband full-duplex (SBFD) operation.

A communication system may support a time division duplexing (TDD) scheme. In a communication system supporting the TDD scheme (hereinafter, referred to as a "TDD communication system"), downlink (DL) symbol(s) and uplink (UL) symbol(s) may be configured in different time resources within one carrier. DL symbols and UL symbols may be associated with coverage and/or latency. In the TDD communication system, a base station may use resources more efficiently than in a frequency division duplexing (FDD) scheme in consideration of various use cases. A resource scheduling operation of a base station in the TDD communication system may be important. For an enhanced TDD operation, an SBFD operation (e.g., an SBFD scheme) may be supported. When the SBFD operation is supported in the TDD communication system, DL communication (e.g., a transmission and reception operation of a DL signal) and UL communication (e.g., a transmission and reception operation of a UL signal) may be simultaneously performed within the same time resource. For example, within the same time resource, some subbands may be DL subbands, and other subbands may be UL subbands and/or FL subbands. In the present disclosure, a DL signal may be interpreted as a DL signal, a DL channel, or "a DL signal and a DL channel" depending on context. In the present disclosure, a UL signal may be interpreted as a UL signal, a UL channel, or "a UL signal and a UL channel" depending on context.

A symbol to which the SBFD operation is applied may be referred to as an SBFD symbol. A symbol to which the SBFD operation is not applied may be referred to as an N(non)-SBFD symbol. The N-SBFD symbol may be a DL symbol, a UL symbol, or an FL symbol. In the SBFD symbol, a terminal may perform DL communication and UL communication. In other words, the terminal may perform a full-duplex operation in the SBFD symbol. In the N-SBFD symbol, the terminal may perform one of DL communication and UL communication. In other words, the terminal may perform a half-duplex operation in the N-SBFD symbol. The SBFD symbol may be a symbol including a subband in which the SBFD operation is performed. A subband for SBFD may be referred to or interpreted as a UL subband. The UL subband may exist (e.g., be configured) in a symbol in which a synchronization signal block (SSB) is transmitted.

Resources for the SBFD operation (e.g., time resources and/or frequency resources) may be configured in a semi-static manner. In other words, a configuration for SBFD resources may be a semi-static configuration. "A configuration of SBFD resources being a semi-static configuration" may mean "SBFD resources being configured by semi-static signaling (e.g., system information or an RRC message)". In the present disclosure, SBFD resources may refer to time resources and/or frequency resources for the SBFD operation. A UL subband for SBFD may be an SBFD resource. Alternatively, SBFD resources may be configured in a dynamic manner. "A configuration of SBFD resources being a dynamic configuration" may mean "SBFD resources being configured by dynamic signaling (e.g., MAC CE, DCI, SCI) ".

SBFD resources (e.g., a UL subband and/or an SBFD symbol) may be configured within DL resources and/or flexible (FL) resources configured by TDD-UL-DL configuration common information (e.g., *TDD-UL-DL-ConfigCommon*). A transition point from an N-SBFD symbol to an SBFD symbol in the time domain may be limited to one. A transition point from an SBFD symbol to an N-SBFD symbol in the time domain may be limited to one. Regarding resource configuration of a subband for SBFD, it may be preferable for a terminal to recognize resource configuration information of the subband for SBFD in advance.

The TDD-UL-DL configuration common information may be used to configure, in the time domain, a pattern (e.g., *TDD-UL-DL-Pattern*) for DL resources and/or UL resources of the TDD communication system. A pattern for DL resources and/or UL resources may be referred to as a UL/DL pattern. The UL/DL pattern may be changed according to an environment of the communication system (e.g., the TDD communication system). Up to two UL/DL patterns may be configured for a terminal. The TDD-UL-DL configuration common information may be a cell-specific parameter (e.g., cell-specific configuration information). A base station may change a configuration (e.g., a transmission direction, a type) for symbol(s) on a per-terminal basis with reference to a specific slot within a preconfigured UL/DL pattern. A slot in which a symbol configuration (e.g., a symbol direction, a symbol type) is changeable may be a slot configured as an FL resource by the TDD-UL-DL configuration common information. A symbol direction (e.g., a symbol transmission direction) and/or a symbol type may be DL, UL, or FL. RRC signaling used to change a configuration of an FL slot (e.g., an FL resource) may be TDD-UL-DL configuration dedicated information (e.g., *TDD-UL-DL-ConfigDedicated*). Table 2 may be TDD-UL-DL configuration common information, and Table 3 and Table 4 may be TDD-UL-DL configuration dedicated information.

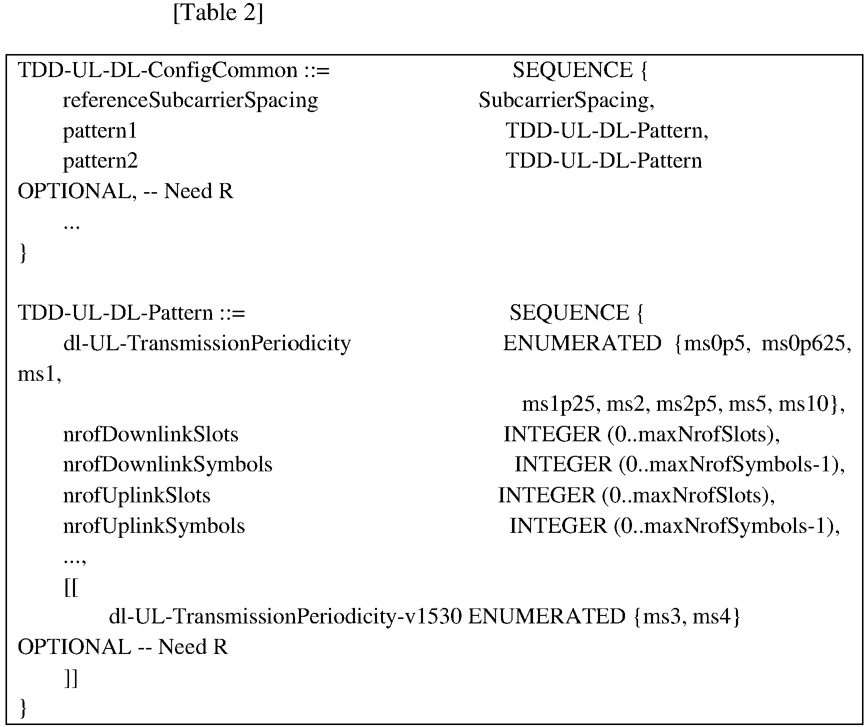

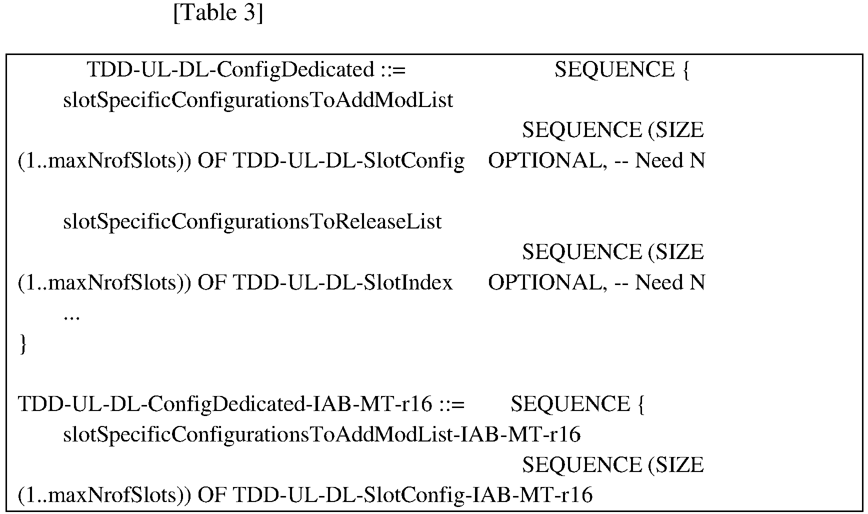

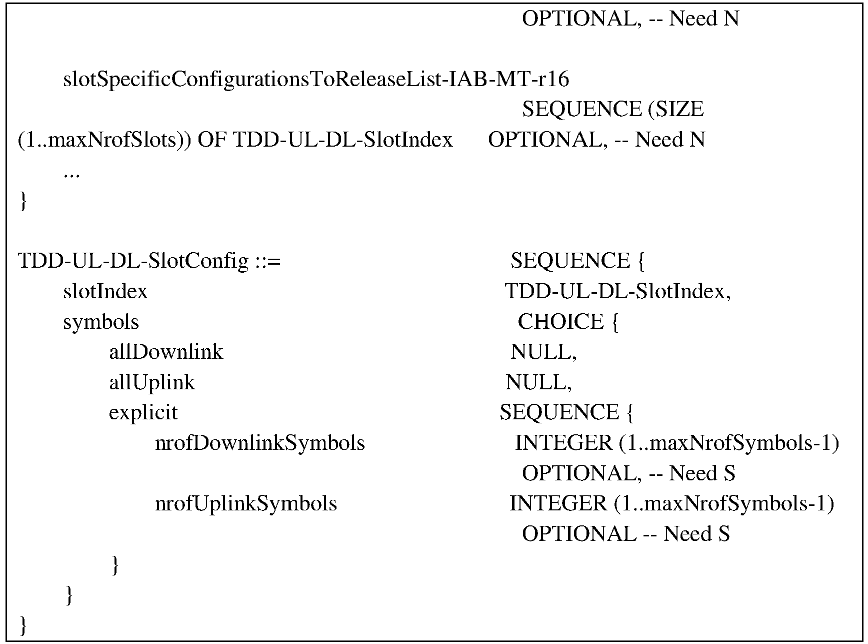

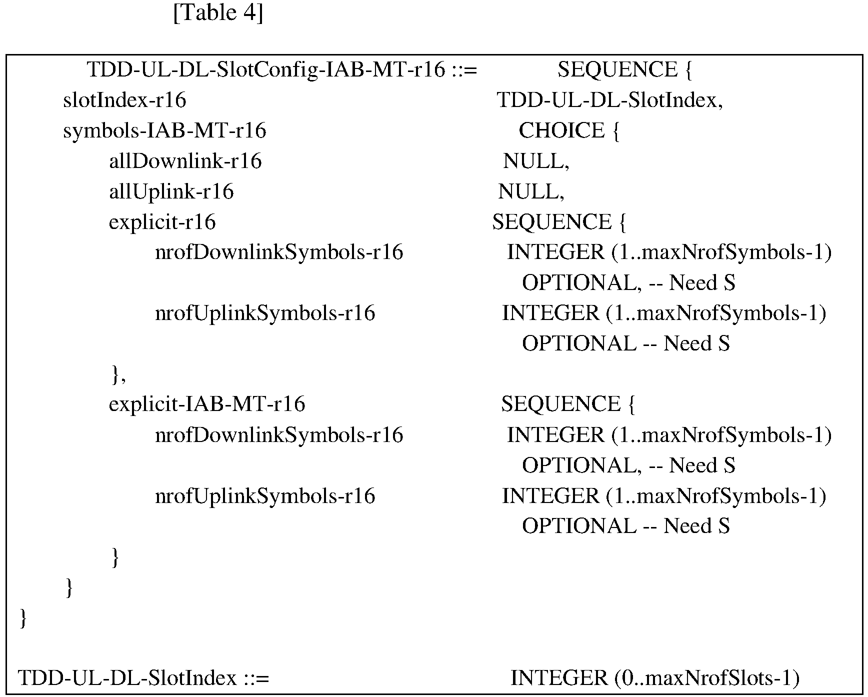

A UL/DL pattern configured by the TDD-UL-DL configuration common information may be repeated according to a specific periodicity (e.g., *dl-UL-TransmissionPeriodicity*). A front region of a time duration to which the UL/DL pattern is applied may be configured as DL resources. A rear region of the time duration to which the UL/DL pattern is applied may be configured as UL resources. Resources that are not configured as DL resources or UL resources in the time duration to which the UL/DL pattern is applied may be configured as FL resources. The periodicity of the UL/DL pattern may vary depending on a reference numerology. For switching (e.g., transition) from DL resources (e.g., DL symbols/slots) to UL resources (e.g., UL symbols/slots), a guard time (e.g., a guard gap) may be required. Since a propagation delay of a DL signal causes interference to UL resources, the guard time may be required for switching from DL resources to UL resources. A separate guard time may not be required for switching from UL resources to DL resources. Since a UL signal is transmitted based on a timing advance command (TAC) indicated by the base station, a guard time for switching from UL resources to DL resources may not be required.

To support an SBFD operation, SBFD resources may need to be configured. In the present disclosure, methods for configuring time resources and/or frequency resources for an SBFD subband (e.g., a UL subband) will be described. TDD-UL-DL configuration common information (e.g., *TDD-UL-DL-ConfigCommon*) may be referred to as "TDD common" or "TDD common information". TDD-UL-DL configuration dedicated information (e.g., *TDD-UL-DL-ConfigDedicated*) may be referred to as "TDD dedicated" or "TDD dedicated information". A UL subband may refer to a subband for SBFD. DL symbol(s) and/or DL slot(s) may be referred to as a DL region (or DL resource). UL symbol(s) and/or UL slot(s) may be referred to as a UL region (or UL resource). FL symbol(s) and/or FL slot(s) may be referred to as an FL region (or FL resource).

### Time-domain configuration of SBFD resources (e.g., UL subband, SBFD subband)

For terminals in an RRC connected state, time location(s) of an SBFD subband may be configured within a period (hereinafter referred to as an "SBFD period"). When at least one UL/DL pattern is configured, an SBFD periodicity may be determined based on Option 1 below or Option 2 below.
- Option 1: The SBFD periodicity may be the same as a UL/DL pattern periodicity indicated by *dl-UL-TransmissionPeriodicity* included in TDD-UL-DL configuration common information
- Option 2: The SBFD periodicity may be an integer multiple of the UL/DL pattern periodicity indicated by *dl-UL-TransmissionPeriodicity* included in the TDD-UL-DL configuration common information.

One slot may include SBFD symbol(s) and N-SBFD symbol(s). When one UL/DL pattern is configured, SBFD symbols may be configured consecutively within a UL/DL pattern period. When two UL/DL patterns are configured and SBFD symbols are configured for one of the two UL/DL patterns, the SBFD symbols may be configured consecutively within a UL/DL pattern period. When two UL/DL patterns are configured and SBFD symbols are configured for both of the two UL/DL patterns, the SBFD symbols may be configured consecutively within each UL/DL pattern period.

SBFD symbols may be configured within DL symbols and/or FL symbols configured by the TDD common information. The SBFD symbols may start from a specific symbol within a slot. The SBFD symbols may end at a specific symbol within a slot. A reference subcarrier spacing (SCS) indicated by the TDD common information may be used as a reference SCS (e.g., a reference SCS for SBFD symbols).

For transmission and reception of SBFD-aware terminals within SBFD symbols configured within DL symbols and/or FL symbols configured by the TDD common information, UL transmissions within UL-usable physical resource blocks (PRBs) may be allowed, DL receptions within DL-usable PRBs may be allowed, UL transmissions outside the UL-usable PRBs may not be allowed, and DL receptions outside the DL-usable PRBs may not be allowed. The above restrictions may not be applied to cross-link interference (CLI) measurement.

For transmission and reception of SBFD-aware terminals in SBFD symbols, the following options for determining a link direction (e.g., transmission and/or reception) may be considered.
- Option 1: A terminal may determine a link direction based on configured transmission, configured reception, scheduled transmission, scheduled reception, and/or collision handling.
- Option 2: The link direction may be explicitly indicated by a base station.

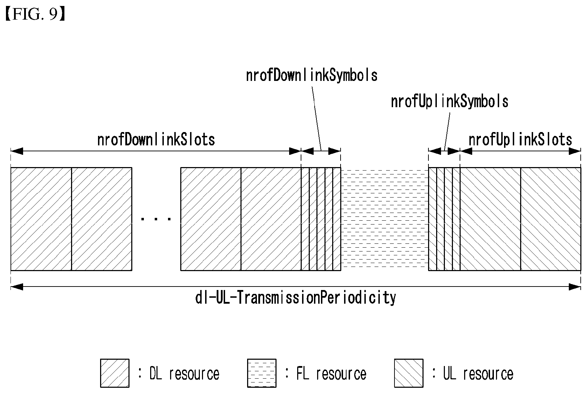

FIG. 9 is a conceptual diagram illustrating an exemplary resource configuration according to a TDD common configuration.

As shown in FIG. 9, DL resources, FL resources, and UL resources may be configured within a period indicated by *dl-UL-TransmissionPeriodicity*. *nrofDownlinkSlots* may indicate the number of DL slots. *nrofDownlinkSymbols* may indicate the number of DL symbols. *nrofUplinkSlots* may indicate the number of UL slots. *nrofUplinkSymbols* may indicate the number of UL symbols. Resources that are not configured as DL resources and UL resources within the period indicated by *dl-UL-TransmissionPeriodicity* may be FL resources. A UL subband (e.g., an SBFD subband) may exist (e.g., be configured) within DL symbol(s) and/or FL symbol(s). In the time domain, SBFD symbol(s) may be configured based on a combination of the following parameters.
- **Parameter 1:** a symbol offset and/or a slot offset for a UL subband (e.g., SBFD subband)

A symbol offset (e.g., Parameter 1) may be an offset to a start symbol of a UL subband configured within DL resources and/or FL resources indicated by the TDD common configuration. A slot offset (e.g., Parameter 1) may be an offset to a start slot of a UL subband configured within DL resources and/or FL resources indicated by the TDD common configuration. A base station may explicitly indicate the symbol/slot offset (e.g., Parameter 1) to terminals. A terminal may identify the symbol/slot offset indicated by the base station. When the symbol offset is an offset from a slot boundary (e.g., when a reference point of the symbol offset is the slot boundary), the symbol offset may be interpreted as a symbol index. When the slot offset is an offset from a frame (or subframe) boundary (e.g., when a reference point of the slot offset is a frame (or subframe) boundary), the slot offset may be interpreted as a slot index.

In a configuration step of a UL subband, an offset (e.g., a symbol/slot offset) for a point at which the UL subband starts (e.g., a point at which the UL subband is allowed to start) from a specific reference point may be indicated to the terminal. For example, the base station may transmit configuration information for the UL subband including the symbol/slot offset (e.g., Parameter 1) to the terminal. The terminal may receive the configuration information of the UL subband from the base station and may identify the symbol/slot offset included in the configuration information for the UL subband. The reference point for the offset may be a slot or a last symbol of the slot in which a channel (e.g., PDSCH or PDCCH) including an SBFD operation command is transmitted. Alternatively, the reference point may be a start symbol (e.g., a first symbol) of a UL/DL pattern closest to the signaling (e.g., a channel including the SBFD operation command) in the time domain. Alternatively, the reference point may be a slot or a last symbol in which a channel (e.g., PDSCH or PDCCH) including scheduling information for UL transmission in an SBFD subband is transmitted. Alternatively, the reference point may be a start symbol (e.g., a first symbol) of a UL/DL pattern closest to the signaling (e.g., a channel including scheduling information for UL transmission in the SBFD subband) in the time domain.

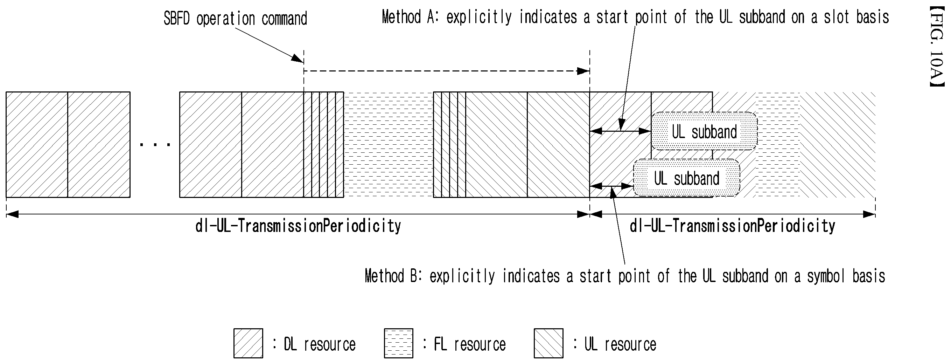

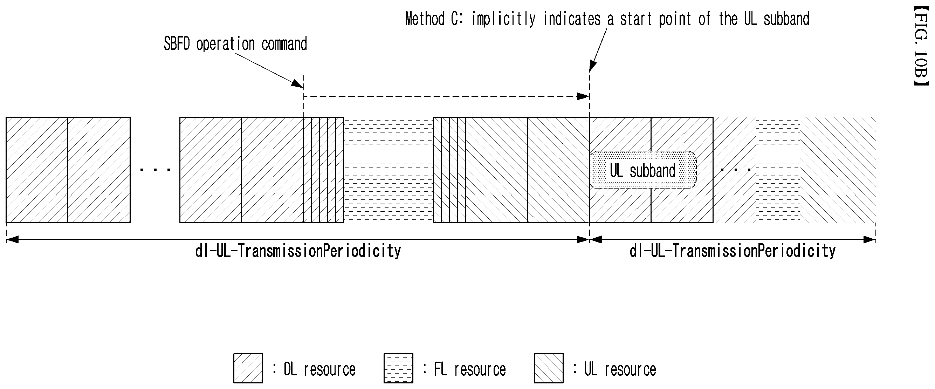

FIG. 10A is a conceptual diagram illustrating a first exemplary embodiment of a start point of a UL subband, and FIG. 10B is a conceptual diagram illustrating a second exemplary embodiment of a start point of a UL subband.

As shown in FIGS. 10A and 10B, a start point of a UL subband may be explicitly or implicitly indicated. In the exemplary embodiment of FIG. 10A, a start point of a UL subband may be explicitly indicated. In the exemplary embodiment of FIG. 10B, a start point of a UL subband may be implicitly indicated. A base station may transmit, to a terminal, an SBFD operation command indicating activation of an SBFD operation. The terminal may receive the SBFD operation command from the base station and may determine that the SBFD operation is activated based on the SBFD operation command. The SBFD operation command may be included in an RRC message, a MAC CE, or DCI. The SBFD operation command may be transmitted in a specific UL/DL pattern period, and a start point of a UL/DL pattern period (e.g., the earliest UL/DL pattern period) occurring after the specific UL/DL pattern period may be a reference point for an offset indicating the start point of the UL subband. The UL subband may start after the offset from the reference point.

In a resource configuration step for the UL subband, the base station may transmit information on the reference point and/or information on the offset to the terminal. The terminal may receive the information on the reference point and/or the information on the offset from the base station. In Method A of FIG. 10A, a slot offset for the UL subband may be configured for the terminal, and the terminal may determine that the UL subband starts after elapse of the slot offset from the start point of the UL/DL pattern period. In Method B of FIG. 10A, a symbol offset for the UL subband may be configured for the terminal, and the terminal may determine that the UL subband starts after elapse of the symbol offset from the start point of the UL/DL pattern period. Alternatively, the start point of the UL subband may be indicated using both the slot offset and the symbol offset.

In the exemplary embodiment of FIG. 10B (e.g., Method C), the terminal may determine that the UL subband starts from the start point of the UL/DL pattern period. The start point of the UL subband may be implicitly configured. In other words, a slot offset and/or a symbol offset indicating the start point of the UL subband may not be configured. Only information on the reference point for the start point of the UL subband may be configured for the terminal, and the terminal may estimate the reference point as the start point of the UL subband. For example, when the SBFD operation command is received without explicit configuration of the start point of the UL subband (e.g., the SBFD subband), the terminal may determine the earliest symbol (e.g., the earliest DL symbol) after the SBFD operation command or a start symbol (e.g., the first DL symbol) of the earliest UL/DL pattern as the start point of the UL subband. Alternatively, the terminal may determine, as the start point of the UL subband, a point located X symbols or X slots after a start point (e.g., a start symbol or a start slot) of the earliest UL/DL pattern after the SBFD operation command. X may be a natural number.

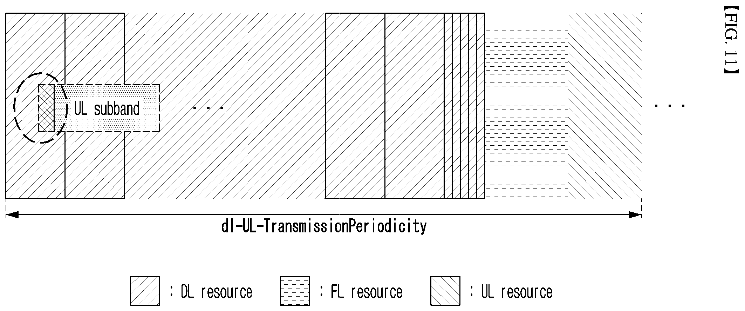

When a DL resource exists before SBFD symbol(s) (e.g., when a DL resource exists before the UL subband), the terminal may not expect transmission in the SBFD symbol(s) (e.g., UL transmission in the UL subband) during a specific time duration (e.g., symbol(s)). The specific time duration may be configured for the terminal by the base station. The reason why SBFD transmission is not expected during the specific time duration is to avoid intersymbol interference due to propagation delay. In other words, when switching from a DL resource to a UL resource, the terminal may expect UL transmission after elapse of N symbols from an initial UL resource (e.g., an initial SBFD symbol). N may be a natural number. A value of N may be configured for the terminal by the base station. The above-described operation may be illustrated in FIG. 11 below.

FIG. 11 is a conceptual diagram illustrating an exemplary UL transmission in a UL subband.

As shown in FIG. 11, when DL symbol(s) exist before a start symbol of a UL subband, a terminal may not expect to perform UL transmission during a preconfigured UL resource (e.g., N UL symbol(s) and/or N UL slot(s)) from the start symbol of the UL subband (e.g., an initial SBFD symbol). The base station may not expect the terminal to perform UL transmission in the preconfigured UL resource. The preconfigured UL resource (e.g., N UL symbol(s) and/or N UL slot(s)) may be defined in technical specifications. N may be a natural number. Alternatively, the base station may indicate (e.g., configure information) on the preconfigured UL resource (e.g., N UL symbol(s) and/or N UL slot(s)) to the terminal. The terminal may identify the preconfigured UL resource based on the indication from the base station. Alternatively, the terminal may transmit information on the preconfigured UL resource (e.g., N UL symbol(s) and/or N UL slot(s)) to the base station. The base station may receive the information on the preconfigured UL resource from the terminal. The information on the preconfigured UL resource may be included in a UE capability report.

Alternatively, when DL symbol(s) exist before a start symbol of the UL subband, the terminal may not expect to receive DL transmission during a preconfigured DL resource (e.g., N DL symbol(s) and/or N DL slot(s)) before the start symbol of the UL subband (e.g., an initial SBFD symbol). The base station may not expect to perform DL transmission in the preconfigured DL resource. The preconfigured DL resource (e.g., N DL symbol(s) and/or N DL slot(s)) may be defined in technical specifications. N may be a natural number. Alternatively, the base station may indicate (e.g., configure) information on the preconfigured DL resource (e.g., N DL symbol(s) and/or N DL slot(s)) to the terminal. The terminal may identify the preconfigured DL resource based on the indication from the base station. Alternatively, the terminal may transmit information on the preconfigured DL resource (e.g., N DL symbol(s) and/or N DL slot(s)) to the base station. The base station may receive the information on the preconfigured DL resource from the terminal. The information on the preconfigured DL resource may be included in a UE capability report.
- **Parameter 2:** A periodicity of a UL subband pattern (e.g., an SBFD subband pattern) (e.g., a pattern repetition periodicity)
- **Parameter 3:** A duration of a single UL subband
- **Parameter 4:** An offset between a plurality of UL subbands configured within one UL subband pattern

Based on Parameter 1, a terminal may configure a UL subband based on a symbol offset or a slot offset within a DL resource (e.g., a continuous DL region) configured based on a TDD common configuration. Variables (e.g., parameters) additionally considered for configuration of the UL subband in the time domain may include a UL subband pattern periodicity (e.g., Parameter 2) and/or a length of a duration of a single UL subband (e.g., Parameter 3). The UL subband pattern periodicity may refer to a periodicity at which a single UL subband pattern or a plurality of UL subband patterns (e.g., UL subband pattern 1 and UL subband pattern 2) are repeated. The duration of the single UL subband may refer to a duration for which the single UL subband continues in the time domain. The duration of the single UL subband may be represented by M symbols and/or N slots. Each of M and N may be a natural number. Each of M and N may be defined in technical specifications. Alternatively, the base station may signal information on each of M and N to the terminal. The terminal may identify each of M and N through signaling from the base station. Alternatively, the terminal may transmit information on each of M and N to the base station. The base station may receive the information on each of M and N from the terminal. The information on each of M and N may be included in a UE capability report.

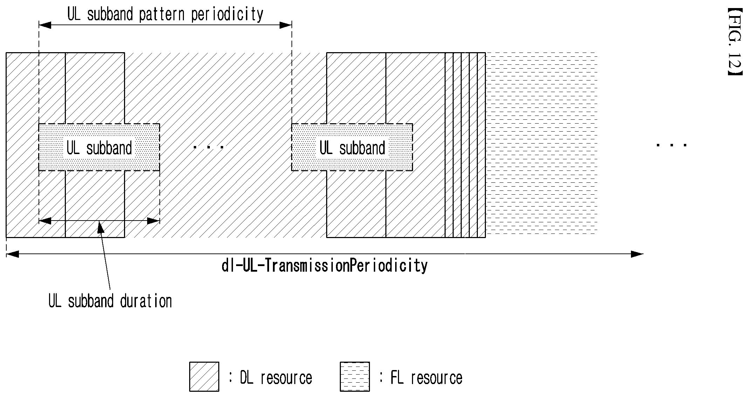

FIG. 12 is a conceptual diagram illustrating a UL subband pattern periodicity and a duration of a UL subband.

As shown in FIG. 12, one or more UL subbands may be configured within a UL subband pattern. When one UL subband is configured within the UL subband pattern, a periodicity of the UL subband pattern may be interpreted as a periodicity of the UL subband. A duration of the UL subband may be configured in units of symbols and/or slots. The number of UL subbands included in the UL subband pattern may be determined by a repetition factor. An interval (e.g., an offset) between a plurality of UL subbands within one UL subband pattern may be configured to have one value (e.g., the same value). The interval between the plurality of UL subbands within one UL subband pattern may be configured according to a value of the repetition factor (e.g., the number of UL subbands included in the UL subband pattern). For example, when a repetition factor of UL subband pattern 1 is different from a repetition factor of UL subband pattern 2, an interval between a plurality of UL subbands within UL subband pattern 1 may be different from an interval between a plurality of UL subbands within UL subband pattern 2. The base station may transmit an interval (e.g., Parameter 4) between a plurality of UL subbands within a UL subband pattern to the terminal through signaling. The terminal may identify the interval between the plurality of UL subbands within the UL subband pattern through signaling from the base station.

A duration of each of a plurality of UL subbands may be configured to have one value (e.g., the same value). Alternatively, each of the plurality of UL subbands may have a different duration in the time domain. The duration of each of the plurality of UL subbands may be configured according to a value of the repetition factor (e.g., the number of UL subbands included in the UL subband pattern). The base station may transmit, to the terminal, information on a duration of a UL subband corresponding to each repetition factor. The terminal may receive, from the base station, the information on the duration of the UL subband corresponding to each repetition factor. For example, a duration of UL subband 1 corresponding to repetition factor 1 may be different from a duration of UL subband 2 corresponding to repetition factor 2. Based on the above-described operation, configuration of UL subbands that may exist within the UL subband pattern may be individually performed.

A UL subband may be repeated up to the last symbol of a region in which the UL subband may exist. The region in which the UL subband may exist may be a DL region and/or an FL region. A UL region, or a region including both a UL region and an FL region, may be configured as a region in which the UL subband cannot exist.

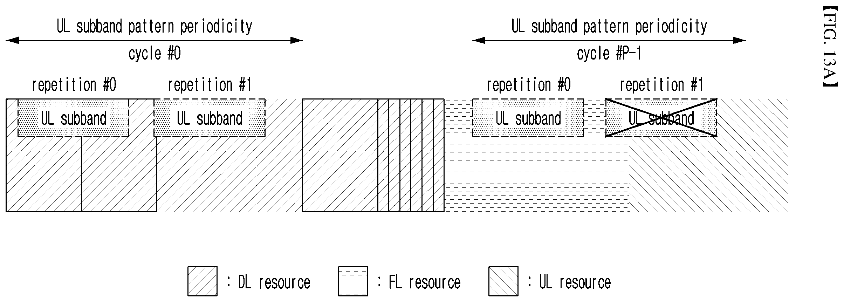

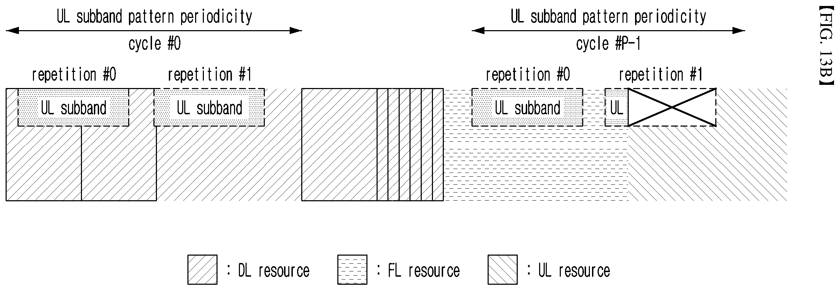

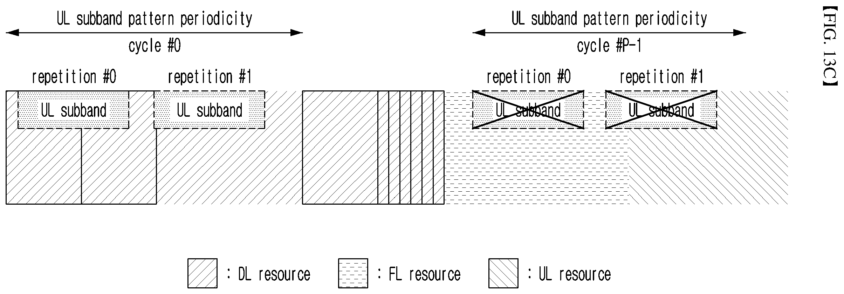

FIGS. 13A, 13B, and 13C are conceptual diagrams illustrating validity rules for a UL subband.

As shown in FIGS. 13A, 13B, and 13C, a plurality of UL subbands may be configured within one UL subband pattern. One or more UL subbands may be periodically configured with respect to a start point. A UL subband may be repeated up to a region in which the UL subband may exist. In the exemplary embodiments of FIGS. 13A, 13B, and 13C, periodicities of the UL subband patterns may be the same. A UL subband may partially or completely overlap with a UL region. In this case, the UL subband overlapping with a UL region may or may not be used for UL communication based on a validity rule. A validity rule may be required to determine whether to perform UL communication in a UL subband overlapping with a UL region.

In the exemplary embodiment of FIG. 13A, when a UL subband overlapping with a UL region exists within one UL subband pattern (e.g., one period of the UL subband pattern), the entire UL subband overlapping with a UL region may not be used for UL communication, and a UL subband that does not overlap with a UL region within the one UL subband pattern may be used for UL communication.

In the exemplary embodiment of FIG. 13B, when a UL subband overlapping with a UL region exists within one UL subband pattern (e.g., one period of the UL subband pattern), a portion of the UL subband overlapping with the UL region may not be used for UL communication, and a remaining portion of the UL subband may be used for UL communication. In other words, portion A of the UL subband may overlap with the UL region, and remaining portion B of the UL subband may not overlap with the UL region. In this case, portion A may be used for UL communication, and portion B may not be used for UL communication. When UL subband 1 not overlapping with a UL region and UL subband 2 partially overlapping with the UL region exist within one UL subband pattern, UL subband 1 may be used for UL communication, and only a portion of UL subband 2 not overlapping with the UL region may be used for UL communication based on the above-described method.

In the exemplary embodiment of FIG. 13C, when a UL subband overlapping with a UL region exists within one UL subband pattern (e.g., one period of the UL subband pattern), all UL subbands included in the UL subband pattern may not be used for UL communication.

The exemplary embodiment illustrated in FIG. 13A may correspond to validity rule A, the exemplary embodiment illustrated in FIG. 13B may correspond to validity rule B, and the exemplary embodiment illustrated in FIG. 13C may correspond to validity rule C. The base station may inform the terminal of a validity rule selected from among a plurality of validity rules through signaling. The terminal may identify the selected validity rule through signaling from the base station. Alternatively, the terminal may inform the base station of a validity rule selected from among the plurality of validity rules through signaling. The base station may identify the selected validity rule through signaling from the terminal. The base station and/or the terminal may identify a valid UL subband based on the validity rule. A UL subband pattern and/or a periodicity of the UL subband pattern may be associated with the number of transitions from DL resources to UL resources and/or the number of transitions from UL resources to DL resources.

Consecutive valid SBFD symbols configured in a DL region and/or an FL region may be referred to as a candidate SBFD occasion. The valid SBFD symbols may be SBFD symbols that satisfy a validity rule among SBFD symbols belonging to an SBFD subband (e.g., a UL subband). The base station and/or the terminal may expect an SBFD operation (e.g., DL communication and/or UL communication according to the SBFD operation) to be performed in the candidate SBFD occasion.

### - Proposal #1

In Proposal #1, the base station may configure resources for a UL subband in the time domain based on one parameter or a combination of a plurality of parameters among the above-described parameters (e.g., Parameters 1 to 4). The terminal and/or the base station may expect an SBFD operation (e.g., DL communication and/or UL communication according to the SBFD operation) to be performed in all candidate SBFD occasions.

### - Proposal #2

In Proposal #2, the base station may configure resources for a UL subband in the time domain based on one parameter or a combination of a plurality of parameters among the above-described parameters (e.g., Parameters 1 to 4). The terminal and/or the base station may expect an SBFD operation (e.g., DL communication and/or UL communication according to the SBFD operation) to be performed in one or more candidate SBFD occasions among all candidate SBFD occasions.

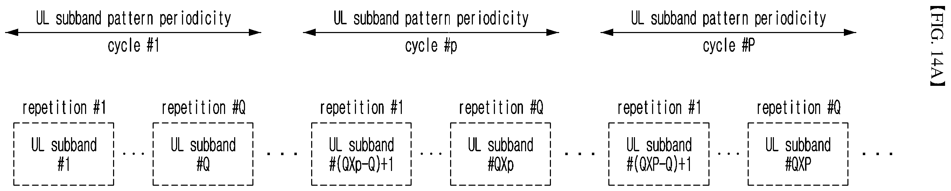

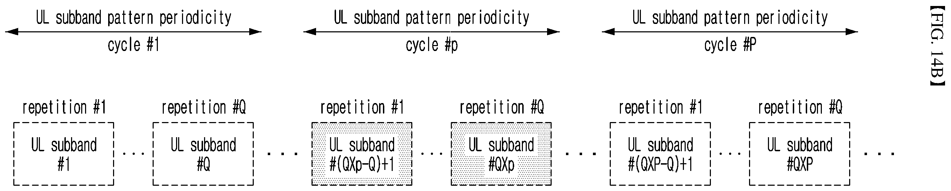

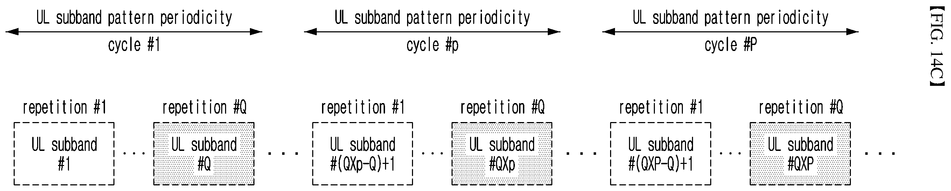

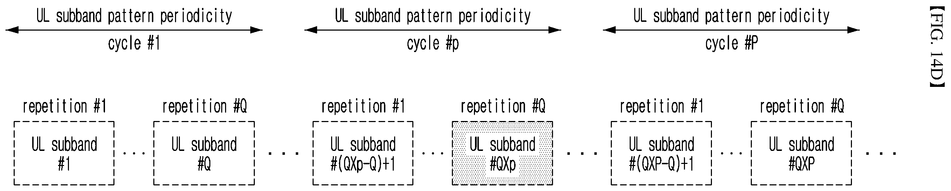

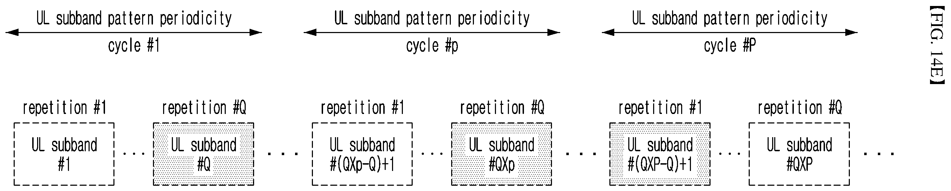

FIGS. 14A, 14B, 14C, 14D, and 14E are conceptual diagrams illustrating exemplary embodiments of configuration of a UL subband.

As shown in FIGS. 14A to 14E, a plurality of UL subbands may be configured within one UL subband pattern. For example, one UL subband pattern may include Q UL subbands. Q may be a natural number. In the exemplary embodiments of FIGS. 14A to 14E, the UL subbands (e.g., all UL subbands) may be candidate UL subbands. In the exemplary embodiments of FIGS. 14A to 14E, periodicities of the UL subband patterns may be the same. The UL subband pattern may be maintained for P cycles. P may be a natural number. As a value of P and/or Q increases, signaling overhead for configuration of the UL subband may increase. UL subband(s) in which communication according to an SBFD operation is performed among the UL subbands may be configured (e.g., indicated) based on the following proposals.
- **Proposal #2-1:** A UL subband may be turned on or off in units of cycles. The exemplary embodiment of FIG. 14B may be a configuration of a UL subband based on Proposal #2-1.

The base station may indicate specific cycle(s) for a UL subband pattern to the terminal through signaling. The specific cycle(s) indicated by the base station may be cycle(s) in which an SBFD operation is performed. The terminal may identify the specific cycle(s) indicated by the base station through signaling. The terminal and/or the base station may expect the SBFD operation to be performed in the specific cycle(s) indicated by the base station. When the base station indicates cycle #p, the terminal and/or the base station may expect an SBFD operation to be performed in cycle #p. p may be a natural number. Information indicating the specific cycle(s) may be a bitmap. A cycle index may be mapped one-to-one to a bit in the bitmap. Cycle indexes may be mapped to bits in the bitmap in descending order or ascending order. The base station may turn one or more cycles on or off using the bitmap. A cycle in an on state may be a cycle in which an SBFD operation is performed. A cycle in an off state may be a cycle in which an SBFD operation is not performed. A cycle index in decimal form may be converted into a binary value. The base station may inform the terminal that one or more SBFD occasions corresponding to a single cycle index are used for an SBFD operation. The terminal may determine, based on an indication (e.g., a configuration) from the base station, that one or more SBFD occasions corresponding to the single cycle index are used for the SBFD operation.
- **Proposal #2-2:** A UL subband may be turned on or off in units of repetitions. The exemplary embodiment of FIG. 14C may be a configuration of a UL subband based on Proposal #2-2.

Based on Proposal #2-2, candidate SBFD occasions belonging to a single UL subband pattern or a single cycle may be independently configured. Locations of SBFD occasions (e.g., candidate SBFD occasions) used for an SBFD operation in UL subband patterns may be the same. A signaling scheme for Proposal #2-2 may be the same as or similar to the signaling scheme for Proposal #2-1 described above. For example, the base station may transmit information indicating 'on' for repetition Q of a UL subband to the terminal through signaling. The terminal may determine, through signaling from the base station, that repetition Q of the UL subband is in an on state. The terminal and/or the base station may determine that an SBFD operation is performed in a UL subband (e.g., an SBFD occasion) associated with repetition Q in the on state.
- **Proposal #2-3:** A UL subband may be turned on or off based on a combination of cycle units and repetition units. The exemplary embodiment of FIG. 14D may be a configuration of a UL subband based on Proposal #2-3.

Proposal #2-3 may be a combination of Proposal #2-1 and Proposal #2-2. SBFD occasion(s) in which an SBFD operation is performed may be configured (e.g., indicated) based on a hierarchical structure. For example, it may be assumed that four cycles exist for a UL subband and that each cycle includes two repetitions. In the environment, a base station may transmit on/off information for the cycles (e.g., '0100') and on/off information for the repetitions (e.g., '10') to a terminal through signaling. The terminal may receive the on/off information for the cycles (e.g., '0100') and the on/off information for the repetitions (e.g., '10') through signaling from the base station. In the on/off information, '0' may indicate that a cycle or repetition associated with the corresponding bit is in an off state. In the on/off information, '1' may indicate that a cycle or repetition associated with the corresponding bit is in an on state. Based on the signaling, the terminal and/or the base station may determine that an SBFD operation is performed in an SBFD occasion (e.g., a candidate SBFD occasion) associated with the first repetition in the second cycle.
- **Proposal #2-4:** One or more SBFD occasions in which an SBFD operation is performed may be indicated by explicit signaling based on all candidate SBFD occasions. The exemplary embodiment of FIG. 14E may be a configuration of a UL subband based on Proposal #2-4.

A bitmap for all candidate SBFD occasions may be configured. All candidate SBFD occasions may be indexed in time order with respect to an initial candidate SBFD occasion. A bitmap for indexes of all candidate SBFD occasions may be configured. When P cycles exist and Q repetitions exist within each cycle, a size of the bitmap may be P×Q bits. A bit set to 0 in the bitmap may indicate that an SBFD occasion associated with the bit is in an off state. A bit set to 1 in the bitmap may indicate that an SBFD occasion associated with the bit is in an on state. The base station may configure a bitmap indicating one or more SBFD occasions in which an SBFD operation is performed and may transmit the bitmap to the terminal through signaling. The terminal may receive the bitmap through signaling from the base station. The terminal and/or the base station may determine that the SBFD operation is performed in the one or more SBFD occasions indicated by the bitmap. Signaling overhead according to Proposal #2-4 may be greater than signaling overhead according to other proposals. When the number of cycles and/or the number of repetitions is small, Proposal #2-4 may be an efficient method.

### - Proposal #3

Regardless of a TDD common configuration and/or a TDD dedicated configuration, a base station may configure SBFD resources (e.g., an SBFD subband or a UL subband) in the time domain using at least one parameter among Parameters 1 to 4. A terminal may identify the SBFD resources indicated by the base station. The terminal may identify SBFD resource(s) satisfying a validity rule among all SBFD resources indicated by the base station and may expect an SBFD operation (e.g., UL communication and/or DL communication according to the SBFD operation) to be performed in the identified SBFD resource(s). The base station may expect the SBFD operation to be performed in SBFD resource(s) satisfying the validity rule among all the SBFD resources. The SBFD resource(s) satisfying the validity rule among all the SBFD resources may be SBFD resource(s) belonging to a DL region and/or an FL region configured by the TDD common configuration and/or the TDD dedicated configuration. Alternatively, based on Proposal #2, the base station may configure (e.g., indicate) to the terminal some SBFD resources in which the SBFD operation is performed among all the SBFD resources. The terminal may identify some SBFD resources in which the SBFD operation is performed based on the configuration (e.g., indication) from the base station.

### - Proposal #4

A maximum number of UL/DL patterns supported by a base station may be two. For example, the base station may configure UL/DL pattern 1 for a terminal. Alternatively, the base station may configure UL/DL pattern 1 and UL/DL pattern 2 for the terminal. UL/DL pattern 2 may start from an end point of UL/DL pattern 1. UL/DL pattern 1 and UL/DL pattern 2 may have different periodicities. Configuration of UL/DL resources in UL/DL pattern 1 may be different from configuration of UL/DL resources in UL/DL pattern 2. For flexibility, the base station may configure a UL subband pattern corresponding to each UL/DL pattern. One or more parameters and/or signaling for configuring the UL subband pattern may be the same as parameters and/or signaling for configuring the UL/DL pattern. To prevent an increase in signaling overhead, a time-domain rule for a UL subband applied to UL/DL pattern 1 may be equally applied to UL/DL pattern 2 (e.g., a UL subband applied to UL/DL pattern 2).

### - Proposal #5

FL resources (e.g., FL symbols and/or FL slots) configured by a TDD common configuration may be reconfigured (e.g., overridden) as UL resources or DL resources by a TDD dedicated configuration. A configuration (e.g., a rule or a validity rule) for a candidate SBFD occasion may be basically applied to DL resources configured by the TDD common configuration, and the configuration for the candidate SBFD occasion may be extended and applied to resources changed from FL resources to DL resources by the TDD dedicated configuration (e.g., reconfigured resources). The above-described operation may be applied when a priority of a UL subband is higher than a priority of DL resources (e.g., general DL resources). Depending on a type (e.g., DL, UL, or FL) of a resource (e.g., a symbol) preceding FL resources, a UL subband may be configured in resources changed from the FL resources to DL resources. For example, when a symbol preceding the FL resources is an SBFD symbol, the SBFD symbol may be configured (e.g., allocated) in the resources changed from the FL resources to the DL resources to maintain continuity of SBFD transmission. When the symbol preceding the FL resources is not an SBFD symbol, the SBFD symbol may be restricted from being configured in the resources changed from the FL resources to the DL resources. Whether an SBFD operation is performed in the FL resources may be determined based on a specific condition.

### Frequency-domain configuration of SBFD resources (e.g., UL subband, SBFD subband)

A maximum number of UL subbands for an SBFD operation in SBFD symbols within a TDD carrier may be one. A UL subband may be located on one side of the carrier. Alternatively, the UL subband may be located in a central portion of the carrier. For semi-static indication of a frequency location of an SBFD subband, the following option(s) may be considered.
- Option 1: Frequency locations of a UL subband and DL subband(s) may be explicitly configured. Guard band(s) may be implicitly derived from RB(s) that do not belong to the UL subband or the DL subband(s).
- Option 2: A location of a UL subband and the number of RBs for guard band(s) may be explicitly configured. DL subband(s) may be implicitly derived from RB(s) not belonging to the UL subband or the guard band(s).

Subband frequency-domain resources may be the same in different SBFD symbols within a TDD carrier. When DL subband(s) are explicitly indicated, a frequency location of a cell-specific UL subband may be indicated with respect to a common resource block (CRB) grid. RB-level granularity may be supported for semi-static indication of the frequency location of the SBFD subband.

Frequency resources of a UL subband within an active UL BWP may be referred to as UL-usable PRBs. Frequency resources of DL subband(s) within an active DL BWP may be referred to as DL-usable PRBs.

To determine UL/DL-usable PRBs, the following options may be considered.
- Option 1: UL-usable PRBs may be determined as an intersection between a cell-specific UL subband and an active UL BWP in SBFD symbols. DL-usable PRBs may be determined as an intersection between cell-specific DL subband(s) and an active DL BWP in the SBFD symbols.
- Option 2: UL/DL-usable PRBs may be explicitly configured in an active UL/DL BWP within SBFD symbols.

A terminal supporting an SBFD operation may not expect communication (e.g., UL communication and/or DL communication) to be performed in a guard band existing between a DL subband and a UL subband. A frequency location of an SBFD subband may be configured with respect to a CRB grid. To reduce implementation complexity, frequency locations of SBFD subbands in adjacent SBFD symbols may be configured to be the same. A frequency location of a UL subband may be configured based on the following scheme(s).

A base station may inform a terminal of size information of a UL subband (e.g., the number of PRBs and/or the number of subcarriers (SCs)) through signaling. The terminal may receive the size information of the UL subband through signaling from the base station. Through signaling, the base station may inform the terminal that a UL subband (e.g., a reference PRB of the UL subband) is configured in PRB(s) or SC(s) above the lowest PRB of the BWP in the frequency domain, that a UL subband (e.g., a reference PRB of the UL subband) is configured in PRB(s) or SC(s) below the highest PRB of the BWP in the frequency domain, or that a UL subband is configured on both sides of the center of the BWP in the frequency domain. The terminal may receive the above-described information (e.g., configuration of the UL subband) through signaling from the base station. A 2-bit indicator may be used for signaling the above-described information. The reference PRB may be the lowest PRB, the highest PRB, or the center PRB of the UL subband.

Guard band(s) may exist in SBFD symbols. Configuration (e.g., a size or a location) of the guard band may be defined in technical specifications. Alternatively, the base station may transmit configuration of the guard band(s) to the terminal through signaling. The terminal may receive the configuration of the guard band(s) through signaling from the base station. Information indicating whether the guard band(s) exist may be transmitted together with the configuration of the guard band(s). The base station may transmit a PRB offset with respect to a CRB to the terminal. The PRB offset may be used to indicate a reference PRB (e.g., the lowest PRB or a start PRB) of the UL subband. The PRB offset may be an offset between the reference PRB of the UL subband and the lowest RB or the highest RB of the CRB.

When a UL subband is configured in the center of a carrier (or a BWP or a CRB), the UL subband may collide with SSB resources. To address the collision issue, the base station may configure the UL subband in an edge portion of the carrier (or the BWP or the CRB). The terminal may receive configuration of the UL subband from the base station. The terminal may ignore the configuration of the UL subband for a slot including SSB transmission and may expect to receive the SSB transmission in the slot. When part or all of the UL subband overlaps with SSB resources, the terminal may not expect UL transmission in the entire UL subband. Alternatively, when a part of the UL subband overlaps with SSB resources, the terminal may expect UL transmission in a remaining portion of the UL subband that does not overlap with the SSB resources. Alternatively, the terminal may perform UL transmission after a time gap from resources that overlap with the SSB resources within the UL subband. When resources for SSB transmission overlap with the UL subband, the base station may expect the above-described operations to be performed. The above-described operations may be performed because a priority of SSB transmission (e.g., synchronization) is higher than a priority of UL transmission.

### Indication of a UL subband

At least time-resource and/or frequency-resource configuration of a UL subband may be performed based on a cell-specific configuration (e.g., cell-specific signaling) and/or a UE-specific configuration (e.g., UE-specific signaling). Based on the UE-specific configuration, FL resources may be configured as DL resources. Since a UL subband may be configured in the DL resources (e.g., SBFD symbols), the UL subband may be configured based on not only the cell-specific configuration but also the UE-specific configuration. A slot format indicator (SFI) may be used to configure a UL/DL pattern. When configuring a UL/DL pattern using an SFI, when a UL subband exists in preceding DL resources (e.g., SBFD symbols), a base station may transmit, to a terminal, an SFI including information (e.g., indication information) indicating whether the UL subband is used (e.g., configured) in resources changed from FL resources to DL resources. The terminal may receive the SFI from the base station and may identify the information (e.g., the indication information) included in the SFI.

For example, when the indication information included in the SFI indicates an on state and FL resources are changed to DL resources, a UL subband configured in DL resources preceding the FL resources may be used as a UL subband in the same frequency resources of the corresponding DL resources until a pattern (e.g., a UL/DL pattern or a UL subband pattern) ends.

The base station may configure guard band(s) for each terminal. Configuration (e.g., a size or a location) of each guard band may be independent for each terminal. Candidate values for the configuration of the guard band(s) may be defined in technical specifications. Alternatively, the base station may configure (e.g., indicate) candidate values for the configuration of the guard band(s) to the terminal through signaling (e.g., an RRC message), and may transmit, to the terminal, a signaling message (e.g., a MAC CE or DCI) including information indicating one value among the candidate values. The terminal may identify one of the candidate values for the configuration of the guard band(s) through the signaling.

Cell-specific resource configuration information may be delivered through a system information block (SIB). A periodicity of a UL subband in the time domain may be the same as a periodicity of a UL/DL pattern configured by a TDD common configuration. When a UL subband is infrequently used, the terminal may increase the periodicity of the UL subband. For example, the terminal may increase the periodicity of the UL subband by n times. n may be a natural number. In this case, the UL subband may be intermittently configured in the time domain. Information on n may be included in configuration information of the UL subband. When two UL/DL patterns are configured by the TDD common configuration, the periodicity of the UL subband may be configured as a sum of periodicity p1 of UL/DL pattern 1 and periodicity p2 of UL/DL pattern 2. Alternatively, the periodicity of the UL subband may be configured as m×(p1+p2). m may be a natural number. Information on m may be included in the configuration information of the UL subband and/or the configuration information of the UL/DL pattern.

A start point and an end point of a UL subband in the time domain may be configured based on one of the following schemes or a combination of two or more of the following schemes. For example, the base station may transmit information corresponding to each scheme to the terminal through signaling. The terminal may identify the start point and the end point of the UL subband based on the information received through signaling from the base station and may configure the UL subband based on the start point and the end point.
- Scheme 1: A start symbol and a duration of a UL subband
- Scheme 2: A start symbol and an end symbol of a UL subband
- Scheme 3: Slot(s) for a UL subband (e.g., slot(s) in which the UL subband is configured), and a start symbol, a duration, and/or an end symbol of the UL subband within the slot(s)
- Scheme 4: Non-UL subbands (N-UL subbands, e.g., N-SBFD symbols) may be configured in the same or a similar manner as Scheme 3, and a subband other than the N-UL subbands may be determined (e.g., configured) as a UL subband. The N-UL subband may be a DL subband and/or an FL subband.
- Scheme 5: The number of slots and/or the number of symbols of a continuous UL subband (e.g., an SBFD subband). The slots may be configured (e.g., indexed) with respect to the first slot of the UL/DL pattern. The symbols may be configured (e.g., indexed) with respect to the first symbol of the UL/DL pattern. Alternatively, the symbols may be configured (e.g., indexed) with respect to an end symbol of a slot (e.g., the first slot of the UL/DL pattern).
- Scheme 6: An N-UL subband may be configured in the same or a similar manner as Scheme 5, and a subband other than the N-UL subband may be determined (e.g., configured) as a UL subband.

The base station may transmit configuration of guard band(s) between a UL subband and N-UL subband(s) to the terminal through signaling (e.g., cell-specific signaling). The terminal may receive the configuration of the guard band(s) through signaling from the base station. Alternatively, the configuration of the guard band(s) may be defined in technical specifications. Alternatively, the guard band(s) may be configured for the terminal by UE-specific signaling. The guard band(s) may be independently configured based on a capability of the terminal. When the guard band(s) are configured by UE-specific signaling, resource efficiency may be improved.

The base station may transmit frequency configuration information of the UL subband to the terminal through signaling. The terminal may obtain the frequency configuration information of the UL subband through signaling from the base station. For example, the base station may configure (e.g., indicate) the number of RBs of the UL subband to the terminal, may configure (e.g., indicate) a start point and/or an end point of the UL subband in the frequency domain to the terminal, and may configure consecutive RBs as the UL subband.

The base station may transmit information on a start point (e.g., a start location) of the UL subband in the frequency domain to the terminal through signaling. The terminal may obtain the information on the start point of the UL subband in the frequency domain through signaling from the base station. The start point of the UL subband may be the lowest PRB within a BWP, the highest PRB within the BWP, or the center PRB of the BWP. Alternatively, the start point of the UL subband may be limited to the lowest PRB within the BWP or the highest PRB within the BWP. In this case, the base station may inform the terminal of the start point of the UL subband in the frequency domain using a 1-bit indicator. A first bit indicator set to a first value (e.g., 0) may indicate that the start point of the UL subband is the lowest PRB within the BWP. A first bit indicator set to a second value (e.g., 1) may indicate that the start point of the UL subband is the highest PRB within the BWP.

Alternatively, the start point of the UL subband may be limited to the lowest PRB within the BWP or the center PRB of the BWP. Alternatively, the start point of the UL subband may be limited to the highest PRB within the BWP or the center PRB of the BWP. In this case, the base station may inform the terminal of the start point of the UL subband (e.g., "the lowest PRB or the center PRB" or "the highest PRB or the center PRB") using a 1-bit indicator. When the UL subband starts from the center PRB of the BWP, p PRB(s) higher than the center PRB and k PRB(s) lower than the center PRB may be configured as the UL subband. Each of p and k may be a natural number. p and k may have the same value or different values.

RB information (e.g., PRB information) may indicate frequency resources of a DL subband and/or frequency resources of the UL subband. The base station may transmit the RB information to the terminal through signaling. The terminal may obtain the RB information through signaling from the base station. When the RB information indicates the number of RBs for the DL subband, the terminal may determine, as the UL subband, RBs obtained by excluding the DL subband, guard band(s) defined in technical specifications, and/or guard band(s) configured by the base station from all RBs (e.g., all RBs belonging to the BWP). Alternatively, when the RB information indicates the number of RBs for the UL subband, the terminal may determine, as the DL subband, RBs obtained by excluding the UL subband, guard band(s) defined in technical specifications, and/or guard band(s) configured by the base station from all RBs (e.g., all RBs belonging to the BWP). As another alternative, when the RB information indicates the number of RBs for the DL subband and the UL subband, the terminal may assume RBs between the DL subband and the UL subband as a guard band.

The base station may configure (e.g., indicate) information on a reference SCS for configuration of a UL subband and/or a DL subband to the terminal through signaling. The terminal may receive the information on the reference SCS through signaling from the base station. The terminal and/or the base station may determine a start point and/or an end point of the DL subband and/or the UL subband according to an offset (e.g., an offset in units of RBs) configured based on the reference SCS. A start RB of the offset (e.g., a reference RB) may be the same as the start RB of the BWP. In this case, a separate reference RB may not need to be configured. For common configuration for a plurality of BWPs, CRB0 may be configured (e.g., regarded) as the reference RB.

### Tx/Rx measurement procedure

UL-usable PRBs may be PRBs in which a terminal can perform UL transmission. The UL-usable PRBs may be configured in units of PRBs. DL-usable PRBs may be PRBs in which the terminal can perform DL reception. The DL-usable PRBs may be configured in units of PRBs. UL-usable PRBs and DL-usable PRBs may be implicitly configured based on a UL subband and/or DL subbands configured based on the above-described indication.

A guard period and/or a guard band may be used as UL-usable PRBs and DL-usable PRBs. When a UL subband and N-UL subband(s) coexist within a single slot (e.g., when SBFD symbol(s) exist), the terminal may not expect all DL receptions and/or all UL transmissions in the entire slot in consideration of interference with another terminal and/or performance degradation. When a gap exists in the time domain, the terminal may expect DL reception in DL resources and/or UL transmission in UL resources. The gap may have a duration defined in technical specifications (e.g., a length in units of symbols or a length in units of time). The gap may refer to a time gap.

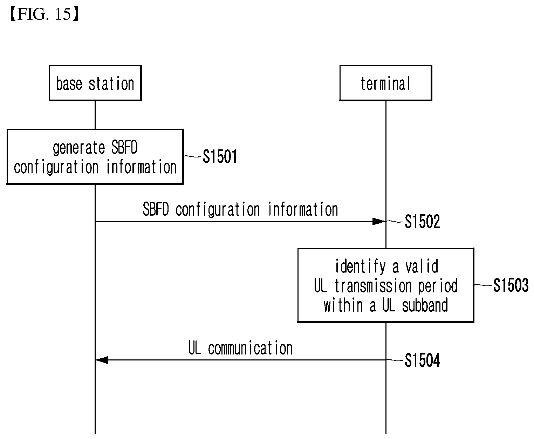

FIG. 15 is a sequence diagram illustrating a UL communication method in a UL subband.

As shown in FIG. 15, a base station may generate SBFD configuration information (S1501). The SBFD configuration information may include configuration information for a UL subband configured in a DL period in the time domain. The SBFD configuration information may include at least one of an index of a start slot of the UL subband, an index of a start symbol of the UL subband within the start slot, an index of an end slot of the UL subband, or an index of an end symbol of the UL subband within the end slot. An index may be interpreted as an offset from a reference point. For example, when the reference point is a subframe boundary or a frame boundary, a slot offset may be interpreted as a slot index. When the reference point is a slot boundary, a symbol offset may be interpreted as a symbol index.

The base station may transmit SBFD configuration information to the terminal through signaling (S1502). The SBFD configuration information may be included in TDD-UL-DL configuration common information (e.g., *TDD-UL-DL-ConfigCommon*). The SBFD configuration information may be included in TDD-UL-DL pattern information (e.g., *TDD-UL-DL-Pattern*) included in the TDD-UL-DL configuration common information. The TDD-UL-DL configuration common information (e.g., the TDD-UL-DL pattern information) may indicate a DL period and/or a UL period. A period indicated as neither a DL period nor a UL period by the TDD-UL-DL configuration common information (e.g., the TDD-UL-DL pattern information) may be an FL period. In the present disclosure, signaling may be at least one of SI signaling (e.g., SIB1), RRC signaling, MAC CE signaling, or DCI signaling.

In step S1502, the terminal may receive the SBFD configuration information from the base station. The terminal may identify information included in the SBFD configuration information and may configure (e.g., identify) a UL subband based on the identified information. For example, the terminal may identify a start point of the UL subband in a DL period in the time domain based on an index of a start slot of the UL subband and/or an index of a start symbol of the UL subband within the start slot, which are included in the SBFD configuration information. The terminal may identify an end point of the UL subband in the DL period in the time domain based on an index of an end slot of the UL subband and/or an index of an end symbol of the UL subband within the end slot, which are included in the SBFD configuration information.

In addition, the base station may identify the start point of the UL subband in the DL period in the time domain based on the index of the start slot of the UL subband and/or the index of the start symbol of the UL subband within the start slot, which are included in the SBFD configuration information. The base station may identify the end point of the UL subband in the DL period in the time domain based on the index of the end slot of the UL subband and/or the index of the end symbol of the UL subband within the end slot, which are included in the SBFD configuration information.

In step S1503, the terminal may identify a valid UL transmission period within the UL subband. In other words, the terminal may determine validity of the UL subband. When DL transmission of the base station (e.g., SSB transmission) is performed within the UL subband, the terminal may identify a period after the DL transmission (e.g., the SSB transmission) within the UL subband as a valid UL transmission period. The DL transmission may have a higher priority than UL transmission. When DL transmission having a lower priority than UL transmission is performed within the UL subband, the terminal may perform the UL transmission within the UL subband regardless of the DL transmission.

The terminal may perform UL communication with the base station in the valid UL transmission period (S1504). The terminal may perform the UL communication after a time gap from SSB transmission of the base station (e.g., DL transmission having a higher priority). The base station may expect the terminal to perform UL communication after the time gap from the SSB transmission (e.g., the DL transmission having the higher priority). The time gap may be configured for the terminal through signaling from the base station. The time gap may be configured in units of symbols or slots. Alternatively, when at least one resource used for SSB transmission overlaps with the UL subband, the terminal may determine the entire UL subband as an invalid UL transmission period and may drop UL communication (e.g., UL transmission) in the UL subband. In other words, the terminal may perform UL communication in a UL subband that does not overlap with at least one resource for SSB transmission. The UL subband that does not overlap with at least one resource for SSB transmission may be a valid UL transmission period. SSBs may be classified into SSBs having a higher priority and SSBs having a lower priority. When SSB transmission with a lower priority than UL transmission is performed within the UL subband, the terminal may perform the UL transmission within the UL subband regardless of the SSB transmission.

UL communication within the UL subband may be performed after a time gap from the last N-SBFD symbol (e.g., a DL symbol, a UL symbol, or an FL symbol). The base station and/or the terminal may expect UL communication within the UL subband to be performed after the time gap from the last N-SBFD symbol. The N-SBFD symbol may be located before the UL subband, and a period within the UL subband after the time gap from the N-SBFD symbol may be identified as a valid UL transmission period. The time gap may be configured for the terminal through signaling from the base station. The time gap may be configured in units of symbols or slots.

The UL communication performed in step S1504 may be grant-based UL transmission, configured grant (CG)-based UL transmission, or random access (RA) preamble transmission (e.g., Msg1 transmission and/or MsgA transmission). An RO for RA preamble transmission may be configured within the UL subband. The base station may transmit, to the terminal, information indicating whether ROs are allowed to be configured within the UL subband through signaling. When ROs are allowed to be configured within the UL subband, ROs located within the UL subband may be determined to be valid ROs. When ROs are not allowed to be configured within the UL subband, ROs located within the UL subband may be determined as invalid ROs. Regardless of configuration by the base station, an RO configured within the UL subband may be determined to be a valid RO or an invalid RO. RA preamble transmission may be performed in a valid RO. RA preamble transmission may not be performed in an invalid RO.

When UL transmission of the terminal collides with DL transmission of the base station within the UL subband, one of the transmission having a higher priority (e.g., the UL transmission or the DL transmission) may be performed based on a priority of the UL transmission and a priority of the DL transmission. When the UL transmission has a higher priority than the DL transmission, a UL subband associated with the UL transmission may be determined to be a valid UL transmission period. When the UL transmission has a lower priority than the DL transmission, a UL subband associated with the UL transmission may be determined to be an invalid UL transmission period. Alternatively, when the UL transmission has a lower priority than the DL transmission, a period overlapping with the DL transmission within the UL subband associated with the UL transmission may be determined to be an invalid UL transmission period. The DL transmission may be SSB transmission, grant-based DL transmission, or semi-persistent scheduling (SPS) DL transmission. The priority of UL transmission within the UL subband may be lower than that of SSB transmission. The priority of UL transmission within the UL subband may be higher than that of DL transmission or SPS DL transmission.

The base station may identify a valid UL transmission period within the UL subband in the same or similar manner as described above for the terminal. The base station may expect UL communication with the terminal to be performed in the valid UL transmission period within the UL subband. The base station may not expect UL communication with the terminal to be performed in an invalid UL transmission period within the UL subband.

In the present disclosure, configuration information for a UL subband may be transmitted through RRC signaling. The configuration information for the UL subband may be transmitted after transmission of TDD configuration information. Operations according to the present disclosure may be applied not only to a licensed spectrum but also to an unlicensed spectrum and/or another spectrum. The operations according to the present disclosure may be extended and applied to determination and/or control of transmission power for sidelink and/or transmission power for a UL link in a supplementary uplink (SUL).

In the present disclosure, a terminal may transmit, to a base station, information indicating whether one or more functions proposed in the present disclosure are supported. The information indicating whether the one or more functions are supported may be included in a UE capability report. The base station may receive the UE capability report from the terminal and may perform signaling and/or operations based on information included in the UE capability report (e.g., the information indicating whether the one or more functions are supported).

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a user equipment (UE), the method comprising:
receiving, from a base station, subband full duplex (SBFD) configuration information;
identifying, based on information included in the SBFD configuration information, an uplink (UL) subband configured in a downlink (DL) period in a time domain; and
performing UL communication with the base station within the UL subband after DL transmission of the base station.

2. The method of claim 1, wherein the UL communication is performed after a time gap from the DL transmission.

3. The method of claim 2, wherein the DL transmission is synchronization signal block (SSB) transmission.

4. The method of claim 2, wherein the time gap is configured for the UE by the base station.

5. The method of claim 2, wherein the time gap is configured in units of symbols.

6. The method of claim 1, wherein the UL communication is performed in the UL subband that does not overlap with at least one resource used for the DL transmission, and the DL transmission is SSB transmission.

7. The method of claim 1, wherein the UL communication is transmission of a random access (RA) preamble, and a random access channel (RACH) occasion (RO) for transmission of the RA preamble is configured within the UL subband.

8. The method of claim 1, wherein the UL communication is performed within the UL subband after a time gap from a last non-SBFD symbol.

9. The method of claim 1, wherein the UL communication is grant-based UL transmission or configured grant (CG)-based UL transmission, and the UL communication is performed in a valid resource within the UL subband that does not overlap with DL transmission of the base station.

10. The method of claim 1, wherein, based on the UL subband overlapping with at least one resource for semi-persistent scheduling (SPS) downlink (DL) transmission and a priority of the UL communication being higher than a priority of the SPS DL transmission, the UL communication is performed within the UL subband.

11. A method of a base station, the method comprising:
generating subband full duplex (SBFD) configuration information;
transmitting the SBFD configuration information to a user equipment (UE);
identifying, based on information included in the SBFD configuration information, an uplink (UL) subband configured in a downlink (DL) period in a time domain; and
performing UL communication with the UE within the UL subband after DL transmission of the base station.

12. The method of claim 11, wherein the UL communication is performed after a time gap from the DL transmission.

13. The method of claim 12, wherein the DL transmission is synchronization signal block (SSB) transmission.

14. The method of claim 12, wherein the time gap is configured for the UE by the base station.

15. The method of claim 12, wherein the time gap is configured in units of symbols.

16. The method of claim 11, wherein the UL communication is performed in the UL subband that does not overlap with at least one resource used for the DL transmission, and the DL transmission is SSB transmission.

17. The method of claim 11, wherein the UL communication is transmission of a random access (RA) preamble, and a random access channel (RACH) occasion (RO) for transmission of the RA preamble is configured within the UL subband.

18. The method of claim 11, wherein the UL communication is performed within the UL subband after a time gap from a last non-SBFD symbol.

19. The method of claim 11, wherein the UL communication is grant-based UL transmission or configured grant (CG)-based UL transmission, and the UL communication is performed in a valid resource within the UL subband that does not overlap with DL transmission of the base station.

20. The method of claim 11, wherein, based on the UL subband overlapping with at least one resource for semi-persistent scheduling (SPS) downlink (DL) transmission and a priority of the UL communication being higher than a priority of the SPS DL transmission, the UL communication is performed within the UL subband.
